# EUROPEAN PATENT APPLICATION

(11) **EP 2 346 139 A2**
(43) Date of publication of application: **20.07.2011**
(21) Application number: 09820760.8
(22) Date of filing: 14.10.2009
(51) Int. Cl.: H02J 9/06

(54) **PRIVATE GENERATOR WITH AUTOMATIC TRANSFORM TO FIRE-USE ONLY FEATURE FOR FIRE AND NON-FIRE EMERGENCES**

(30) Priority: 14.10.2008 KR 20080100844; 14.10.2009 KR 20090097751
(71) Applicant: Lee, Won Kang, Seoul 132-757 (KR)
(72) Inventor: Lee, Won Kang, Seoul 132-757 (KR)
(74) Representative: Pulieri, Gianluca Antonio
(86) International application number: PCT/KR2009/005919
(87) International publication number: WO 2010/044610

(57) **Abstract**

The present invention relates to a private generator having an automatic switching function to fire extinguishment, the private generator having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; and a control instrument connected to the measuring instrument at an input side thereof and connected to the circuit breaker for power interruption at an output side thereof, such that when the value of the variations of the power load inputted from the measuring instrument reaches a predetermined set value, the circuit breaker for power interruption is primarily broken, thereby keeping the main power circuit breaker from being broken before the breaking of the circuit breaker for power interruption.

## Description

### [Technical Field]

The present invention relates to a private generator for power interruption and fire extinguishment having an automatic switching function to fire extinguishment that has a characteristic of automatically supplying fir extinguishment power when a fire breaks out, and more particularly, to a private generator for power interruption and fire extinguishment having an automatic switching function to fire extinguishment that is operated to select one having a larger capacity in a power interruption load and a fire extinguishment load, while being used for power interruption and fire extinguishment, thereby reducing installation costs, and that supplies the power interruption load at the time of normal power interruption, at the same time supplies the power interruption load and the fire extinguishment load at an initial step at the time of power interruption during the generation of a fire, and gradually increases the fire extinguishment load as the fire is developed, such that if the fire extinguishment load almost reaches a set value near a rated capacity of the generator, the supply of the power interruption load is primarily limited, and alternatively, the supply of the power interruption load is stopped in cooperation with the operation of fire extinguishing facilities by the generation of fire, which safely supplies the power for the fire extinguishment load during the fire, thereby providing high economical efficiencies and safety.

First of all, the terms used in the detailed description of the present invention will be explained.

A term, private generator with automatic transform to fire-use only feature for fire and non-fire emergences, defines an emergency power generator used to supply a power interruption load as an emergency load from which a fire extinguishment load is not contained and the fire extinguishment load for fire-extinguishing facilities. The above-mentioned private generator is automatically operated in a case where a fire breaks out during power interruption or where power is interrupted during fire to supply the power interruption load and the fire extinguishment load, to sense the variations of the power load consumed by the fire broken out or the operation of the fire extinguishing facilities, and to stop the supply of the load except the fire extinguishment load on set conditions or momentarily, such that the power for fire extinguishment is continuously supplied even though the generator reaches its overload conditions. The private generator is operated at high and low voltages and in single and parallel running ways. Hereinafter, the term, private generator with automatic transform to fire-use only feature for fire and non-fire emergences, is simply referred to as 'private generator with automatic transform to fire-use only feature?or more simply to as 'private generator'. Further, the automatic switching function to fire extinguishment in view of the fire extinguishment load is similarly referred to as a fire extinguishment power-automatic selecting function, a fire extinguishment power-preserving function, a fire extinguishment power-protecting function, a fire extinguishment power-maintaining function, a fire extinguishment power-switching function, a fire extinguishment power-transferring function, a fire extinguishment power-transforming function, and a fire extinguishment power-preferring function, and on the other hand, the automatic switching function to fire extinguishment in view of the power interruption load is similarly referred to as an automatic controlling function, an automatic limiting function, and an automatic breaking function for the power interruption load, a normal load, and the load except the fire extinguishment load.

The private generator is formed of a single or a plurality of generators installed on a building or facility to supply emergency power for fire extinguishment during power interruption of normal power, and it means a private breaking system including a main power circuit breaker, a circuit breaker for power interruption and a circuit breaker for fire extinguishment disposed respectively on an emergency power line, and wiring devices like various kinds of molded case circuit breakers and switches.

The fire extinguishment load is a power load needed for the fire extinguishing facilities installed on a building or facility so as to perform the generation of fire alarming, fire fighting, and life escaping in accordance with the fire extinguishment-related laws and the requirements for safety. The fire extinguishment load largely includes an emergency power load in accordance with construction laws and air laws and further includes communication and security loads as necessary loads.

The fire extinguishment is used for fire extinguishment load, fire extinguishing facilities, and lines or wiring devices for fire extinguishment.

The power interruption load is an emergency power load except the fire extinguishment load according to the fire extinguishment-related laws, that is, a general emergency load. Further, the power interruption load is limited only to the emergency power load for business conveniences except the power load defined under the laws including fire extinguishment laws, construction laws, and air laws. The power interruption is used for power interruption load, and emergency power lines or wiring devices for power interruption.

Main power is the generation power of the private generator, and in case of the generator for power interruption and fire extinguishment, the main power is obtained by adding power interruption power and fire extinguishment power.

The fire extinguishment power is the emergency power supplied to satisfy the power load of the fire extinguishing facilities activated upon the generation of fire or a test operation.

Control power is the power needed for operating and stopping a private generator, electric facilities, and fire extinguishing facilities and for performing the manual or automatic control of safety devices, and the control power includes AC/DC in the range from 85V to 265V, and DC of 110V, 60V, 48V, 24V and 12V.

A main power line is the line extending from the power output of the private generator to the line before branching to a circuit breaker for power interruption and a circuit breaker for fire extinguishment via a main power circuit breaker. In case of the high voltage private generator, a drawing circuit breaker and a transformer are disposed between the private generator and the main power circuit breaker, and at this time, the main power line includes the line via the drawing circuit breaker and the transformer. However, in case of the parallel running generator, the main power line is extended from the line on which the output sides of the respective generators gather to the line via the main power circuit breaker. A fire extinguishment line is an electric line extending from the lower end of the main power circuit breaker to the load sides of various fire extinguishing facilities via the circuit breaker for fire extinguishment in a control panel or a distribution panel and the circuit breakers and switches of the distribution panel and a panel board.

*14A control line is the line to which control power is supplied for operating and stopping the private generator and the fire extinguishing facilities and for controlling the safety devices like circuit breakers. The control line is also referred to a manipulating line in view of line and to a manipulating power line in view of manipulating power.

A measuring instrument is a component for sensing the conditions of the generation of fire, when emergency power is supplied by the activation of the private generator at the state of power interruption upon generation of fire or at the state of generation of fire upon power interruption. The input side of the measuring instrument is connected to power equipment, fire extinguishing facilities, or the corresponding equipment thereto, and the output side thereof is connected to a control instrument or a circuit breaker for power interruption.

That is, the measuring instrument, which is provided on the main power line, so as to measure the variation values of the power load, is separately installed or includes a current transformer (CT), a power transformer (PT), a digital total power control system, or the like, which is provided conventionally for controlling or main power circuit breaker.

The measuring instrument is adapted to sense a fire signal of a receiver unit in the fire extinguishing facilities, from which the generation of fire is recognized, or an operating signal from the operating devices for fire extinguishment like a discharge signal.

A control instrument is a single or a plurality of control devices or control lines disposed in parallel or serial relation to each other on the circuit breaker for power interruption, which receive the input from the measuring instrument, and generate a single output or a plurality of outputs at a set value to provide respective contacts, and supply control power to a trip terminal of the circuit breaker for power interruption to open the trip terminal.

The control instrument includes an OCR or OPR mounted internally or externally in/from the main power circuit breaker, and it is used with existing embedded products in a controller of a private generator or existing external products installed separately. If the contact capacity of the control instrument is smaller than the capacity (in the range from about 5A to 10A) needed for controlling the circuit breaker for power interruption, an auxiliary control instrument like a control relay is provided as a secondary control instrument, and in this case, the control instrument includes the auxiliary control instrument or the control instruments containing the measuring instrument. The control instrument includes the following components or parts.

Firstly, the control instrument includes a generator controller, a programmable logic controller (PLC), a microcomputer (MICOM), a central processing unit (CPU), a personal computer (PC), a direct digital controller (DDC), a distributed control system (DCS), a distributed operated console (DOC), a supervisory control and data acquisition (SCADA), an application specific integrated circuit (ASIC), an application specific instruction processor (ASIP), a maximum power load controller, and other controllers.

Secondly, the control instrument includes a meter relay, a watt meter, a watt-hour meter, a var meter, a var-hour meter, an ammeter, a digital multi power meter, a digital relay, an inductive relay, a thermal relay, an over current relay (OCR), an over power relay (OPR), an electronic over current relay (EOCR), a control relay, an intelligent communication & measuring device, an intelligent measuring & protection device for feeder, other relays, and auxiliary contacts of the control instrument.

Thirdly, the control instrument includes the control lines disposed for primarily breaking the circuit breaker for power interruption from the measuring instrument, power equipment, or fire extinguishing facilities when a fire breaks out.

The main power circuit breaker is a power circuit breaker installed on the main power line, for protecting the private generator and the main power line, in case of a single operating way. On the other hand, in case of a parallel operating way, the main power circuit breaker is installed on the main power line to which the lines at the rear ends of the circuit breakers disposed on the respective private generators are connected. The main power circuit breaker for high voltage makes the use of a vacuum circuit breaker (VCB) and an oil circuit breaker (OCB), and the main power circuit breaker for low voltage makes the use of an air circuit breaker (ACB) and a molded case circuit breaker (MCCB). In case of the air circuit breaker (ACB), the over current relay (OCR) is embedded therein or mounted at the outside of the ACB, and the vacuum circuit breaker (VCB) is used in parallel with the OCR and the intelligent measuring & protection device for feeder in which control and communication functions are embedded.

The circuit breaker for fire extinguishment is installed to protect the power line for fire extinguishment at the interior or exterior of the control panel of the generator, and includes a single or a plurality of circuit breakers on the power line for fire extinguishment branched from the main power line of the generator. Further, the circuit breaker for fire extinguishment includes the branch circuit breakers for fire extinguishment at the lower end thereof and the molded case circuit breaker and switch of fire extinguishing equipment. Generally, the ACB and MCCB having a circuit-breaking function are used.

The circuit breaker for power interruption is installed to protect the power line for power interruption at the interior or exterior of the control panel of the generator, and includes a single or a plurality of circuit breakers on the power line for power interruption branched from the main power line of the generator. Further, the circuit breaker for power interruption includes the branched circuit breaker for power interruption at the lower end thereof and the molded case circuit breaker and switch for power interruption equipment. Generally, the ACB and MCCB are used for the circuit breaker for power interruption, and the circuit breaker for power interruption includes a trip device, a trip alarming device, and an embedded auxiliary contact.

Interlock is an operation control circuit of the generator wherein the emergency power line including the circuit breaker for power interruption is closed and the switch for fire extinguishing facilities is opened at the time of normal power interruption, and contrarily, the circuit breaker for power interruption is opened in cooperation with the operation of the switch or the fire signal or other signals of the fire receiver unit in automatic fire detection equipment and the main power circuit breaker and the circuit breaker for fire extinguishment are kept at the closed state.

The switch is the switch for opening and closing an electric line installed to operate and stop power instruments for fire extinguishing facilities in a manual or automatic-operating manner, and generally, the switch makes the use of a magnetic switch.

The fire extinguishing facilities are adapted to perform fire detecting and alarming, fire fighting, and escaping from fire, and includes alarming equipment, automatic fire detection equipment having sensors, relays and a receiver unit, an indoor fire hydrant system, a sprinkler system, a foam extinguishing system, a water spraying extinguishing system, a gas extinguishing system, a powder extinguishing system, a stand pipe system, an outdoor fire hydrant system, an emergency socket system, a smoke control system, lead lamps, an emergency lamp system, and other fire extinguishing systems. The fire extinguishing facilities include fire extinguishing materials, mechanical instruments, pipes, and related-operating devices like switches. Furthermore, the fire extinguishing facilities include a smoke extraction system and an emergency elevator system. The fire extinguishing equipment is all kinds of unit products or parts constituting the fire extinguishing facilities and includes various sensors, circuit breakers, and switches for the fire extinguishing facilities operated generally upon generation of fire. Further, the fire extinguishing equipment includes a signal emitting instrument. The fire extinguishing equipment is also called operating equipment for fire extinguishment in view of the operation of the equipment.

A fire signal generation device is adapted to alarm and output a fire signal from the receiver unit of the automatic fire detection system. Further, the fire signal generation device includes an instrument outputting a variation value of the load on the main power line or the line for fire extinguishing facilities which is increased by the operation of the fire extinguishing facilities, a signal generation device for generating sensing, displaying and alarming signals by the operation of the fire extinguishing facilities, and operating contacts. Further, the fire signal generation device includes a device for outputting the fire signal of the relays of the automatic fire detection system or the receiver unit, a device for outputting the discharge signals of a water switching device for starting a fire pump and a water flow detection device, operating devices of switches of various kinds of fire extinguishing equipment, and fire-alarming devices.

### [Background Art]

To protect people's life and property from fires when fire breaks out, escaping facilities, alarming systems, fire extinguishing systems and fire extinguishing activity systems, as the fire extinguishment facilities built in a building or facility being in a danger of fire, are installed by their needs or should be installed necessarily in accordance with the laws related to fire protection. To separately provide emergency power except normal power when power interruption happens, the following regulations are suggested in various countries. In Korea, first, in accordance with the Paragraph 2 of Article 8 in national fire safety codes (NFSC 102) of indoor fire hydrant systems on the basis of the regulations on the installation and safety management of fire extinguishment facilities, the indoor fire hydrant systems are installed in buildings having seven stories except the basement and a total floor area of 2,000m² or more or in buildings having a total floor area of basement of 3,000m² or more. In America, National fire protection association NFPA codes are suggested, and in Japan, in accordance with the Paragraph 4 of Article 12 in the regulations of fire services act, the indoor fire hydrant systems are installed in buildings having a total floor area of 1,000m² or more. The emergency power is prepared by receiving the power from two different substations and changing the power upon the generation of power interruption, and alternatively, the emergency power is prepared by installing a private generator or battery equipment. The private generator is generally adopted to prevent the increase of the installation costs thereof. In addition to the power load for fire extinguishment, a power load for power interruption is prepared, and so as to provide conveniences to the residents in the building when the power interruption of normal power happens, in this case, a part (about 1/3) of the load of normal power is supplied as emergency power. In Korea, the emergency power is prepared in accordance with Article 72 (facilities for emergency power) of electrical equipment regulations based on electricity business laws and No.4168 (emergency power) of indoor wiring provisions, and in this case, since the contents of the power capacities are not suggested therein, the emergency power is designed on the basis of a user's requirements, a designer's experiences and power, and practices. Commonly, the capacities of the loads for fire extinguishment and power interruption are almost similar to each other.

Referring to the contents constituting the emergency power load, for example, in lighting equipment of the emergency power load, a normal light has illumination in the range from 1501x to 2001x, an emergency light for power interruption has illumination in the range from 501x to 701x, and an emergency light for fire extinguishment has illumination in the range of 1.01x or more, which shows large differences among them in accordance with their use purposes. Accordingly, a method of breaking the loads for power interruption at the same time to protect the fire extinguishment power when fire breaks out is most effective in view of fire extinguishment, since the fire extinguishing facilities are activated, but a method of supplying the loads for power interruption and fire extinguishment at the same time at the initial step of the generation of fire and stopping the supply of the load for power interruption as the loads are increased by the lapse of time is most advantageous in view of the fire extinguishment and the escaping of the residents.

The technical fields in constructing buildings or facilities include civil engineering, construction, mechanical engineering, electricity, fire extinguishment, communication, and landscape architecture fields. Among them, the fire extinguishment field is classified into a fire extinguishment mechanical field and a fire extinguishment electrical field. The power capacity needed for fire extinguishing facilities is determined by a designer of the fire extinguishment mechanical system, and the emergency power capacity of the private generator for the power load is determined not by the designer of the fire extinguishment mechanical system, but by a designer of the fire extinguishment electrical system. Accordingly, the designers in the two fields have no interference or contact with each other in their working scope, which results in the formation of a dead zone. Typically, existing private generators are installed by selecting one of the following ways.

As a first way, a generator for fire extinguishment and a generator for power interruption are installed independently of each other. This ensures more reliable stability, but causes the number of generators and the construction area to be undesirably increased. So, the installation of the two generators is not adopted well.

As a second way, a generator is installed having a capacity obtained by adding a fire extinguishment load and a power interruption load. This provides the capacity being two times as large as a single load, thereby ensuring reliable stability in view of the capacity, but causes high construction costs. Since this way is more advantageous than the first way, it is adopted in some cases.

As a third way, a generator is installed by selecting a larger load in the fire extinguishment load and the power interruption load and supplying the fire extinguishment load or the power interruption load through the selected single load capacity.

This is based upon the concept where the power interruption load is supplied upon the power interruption and the fire extinguishment load upon the generation of fire. In real states, however, the power interruption load is used at the time of power interruption, and the power interruption load and the fire extinguishment load are used at the same time when the fire breaks out during power interruption or when the power interruption happens during fire, such that the capacity of the generator is over to activate the power breaker for protecting overload of generator, which stops the supply of the emergency power, thereby providing many dangers in those states.

The required capacity of the generator is calculated in accordance with the starting characteristics of the locked current increased upon driving of a motor, and generally, the load capacity is calculated by way of PG (wherein PG1, PG2 and PG3 are calculated and a largest value of them is selected in accordance with KOSHA code E-21-2004 published on 2004.12.31 of Industrial safety & health agency) or RG (wherein RG1, RG2, RG3 and RG4 are calculated and a largest value of them is selected in accordance with NEGA-C201 of generator capacity calculation standards of Japanese internal combustion power generation equipment association).

The calculation of the capacity is performed for power interruption and for fire extinguishment. In calculating the generator capacity, the power interruption load to which a needed capacity is applied and the fire extinguishment load to which a needed capacity is not applied are calculated. In this case, single load adoption selects a larger load in the power interruption load and the fire extinguishment load, and added load adoption adds the two loads. In case of super high-rise buildings having a large water tank provided on the top thereof, as a safety plan for earthquake resistance, the water source for fire extinguishment is based on a natural head-pressurizing way, such that since the fire extinguishment load is relatively lower than the power interruption load, the reduction of the installation cost by the single load adoption when compared with the added load adoption is very low, thereby making it easy to calculate the generator capacity by the addition of the two loads and causing no troubles. In case of middle or large-sized high-rise buildings or apartments wherein the difference between the two loads rarely exists or is very small, however, the installation costs are two times as large as those with the added load adoption, such that the single load adoption is typically selected (see p.94 of electricity information communication facility design manual 2008 of Korea National Housing Corporation) so as to reduce the increase of the installation costs. In this case, in a serious state where fire and power failure break out at the same time, the lack of the generator capacity is made to cause the installation of the generator for fire extinguishment to be useless.

According to the rules of the capacity and rating of emergency power of NFPA 70 701-6 in America commonly used over the world, it is mentioned that emergency equipment provides appropriate capacity and rating to all instruments operated at the same time, and the emergency equipment should be adequate to a maximum locked current generated from terminals. Accordingly, the capacity of the emergency power should be provided sufficiently.

Up to now, however, design and construction have been primarily focused to reduce installation costs, which causes a degree of safety to be very low. This results from the structural characteristics and technical characteristics in view of the execution systems in the related fields. Moreover, the installation of the private generator is prescribed, but in real cases, the contents related to the capacity of the generator for fire extinguishment facilities are not specifically suggested. On the other hand, the burden in the cost for safety is clearly given, but the safety itself is not exposed well to the outside, which undesirably causes the lack of safety awareness and the carelessness about safety. Recently, these problems appear in this field, and solutions and comments on the problems are sent to the related primary agencies. Thus, the related regulations have been revised or improved through administrative guidance, such that in case where the private generator for emergency power is used commonly for power interruption and for fire extinguishment, it is recommended that the two power interruption and fire extinguishment loads are added, thereby step by step solving the problem that the safety is ignored. However, since the burden caused by the increase of the construction cost should be decreased, reasonable and economical solutions are required. Accordingly, the present invention will solve the problems on safety by the implementation of technology in response to such requests and satisfy the related requirements and the demand's needs.

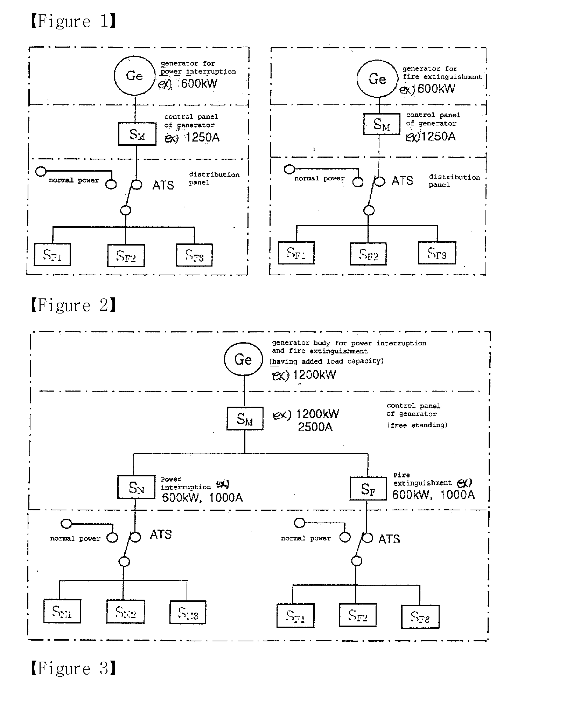

FIG.1 is a schematic circuit diagram showing an emergency generator for power interruption and a generator for fire extinguishment installed independently of each other according to conventional practices, each of the generators supplying the respective required loads. The configuration of the conventional generators is stable in view of capacities of the generators. However, since the emergency generator for power interruption and the generator for fire extinguishment are installed separately from each other in a single building, the number of generators is about two times as large as the generator having a single capacity, thereby failing to give low economical efficiencies. In addition, the space for installation of the generators is increased to cause the construction costs and the management costs after construction to be all raised. Accordingly, it is really hard to apply the system to this field.

FIG.2 shows a single private generator system which is capable of supplying emergency power at the time of power interruption according to conventional practices. The generator has the power of a capacity obtained by adding a power interruption load and a fire extinguishment load. By the way, the configuration of the conventional system is stable in view of the capacity of the generator, but it has the following problems. That is, the single generator, which has the capacity obtained by adding the power load (e.g., 600kW) for power interruption in normal states and the power load (e.g., 600kW) for fire extinguishment during the generation of fire, is installed in a single building, such that the capacity of the generator is two times as large as the single capacity really used, thereby making the economical efficiency and the effectiveness lowered. Therefore, the system is adopted in limited conditions wherein there is a request of the fire station under jurisdiction as the authority of approving the construction permit, there is a request of a fire construction supervisor, or such problems are recognized and the solutions are applied to the design by construction companies, but in real cases, the system is not adopted well.

FIG.3 shows a private generator system having a single capacity which is capable of supplying emergency power at the time of power interruption according to conventional practices. The configuration of the lines is the same as in FIG.2, but the generator selects a larger capacity in the power interruption load and the fire extinguishment load in a single building. In view of the economical efficiency of the reduction of the construction costs, the system is widely adopted in general buildings and apartment constructions, but it has the following problems. That is, in case where fire breaks out at the time of power interruption or in case where power is interrupted at the time of generation of fire, the power interruption load (e.g., 600kW) and the fire extinguishment load (e.g., 600kW) are at the same time applied, and with the lapse of time, the required loads of the both sides are increased with a result that the two loads are two times (e.g., 1200kW) as large as the rated capacity of the generator. In this case, the overload occurs during the operation of the generator, and thus, the main power circuit breaker (e.g., 600kW) of the generator to which the added loads are applied is first operated before the operation of the circuit breaker (e.g., 600kW) for power interruption and the circuit breaker (e.g., 600kW) for fire extinguishment. As a result, the supply of emergency power stops, thereby making impossible to operate the fire extinguishing facilities. This causes the same results as when no private generator as the emergency power equipment for fire extinguishment is installed, which violates the regulations on the supply of the emergency power for fire extinguishment.

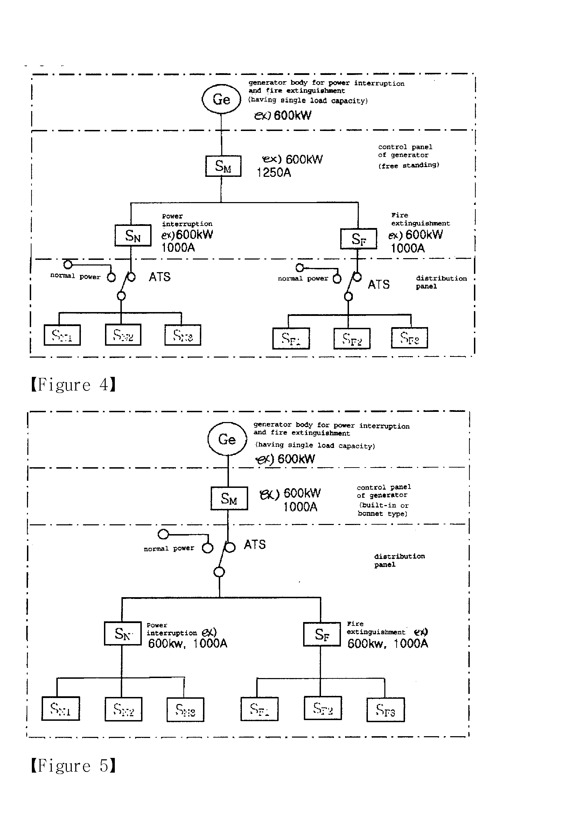

FIG.4 shows another private generator system having a single capacity which is capable of supplying emergency power at the time of power interruption according to conventional practices. The configuration of the lines is the same as in FIG.3, but in case of installing a built-in generator or in case of installing a bonnet type generator which is called disaster prevention type generator, an ATS is installed on a main power line at the lower end of a main power circuit breaker, and a circuit breaker for power interruption and a circuit breaker for fire extinguishment are branched from the lower end of the ATS. The danger of the loss of the effectiveness of the installation of the private generator for fire extinguishment according to the over capacity of the generator is caused in the same manner as FIG.3.

FIG.5 shows yet another private generator system having a single capacity which is capable of supplying emergency power at the time of power interruption according to conventional practices. The configuration of the lines is the same as in FIG.3, but in this configuration, the private generators are installed in parallel with each other. A main power circuit breaker is installed on a main power line to which the lines via the circuit breakers of the respective generators are connected, and a circuit breaker for power interruption and a circuit breaker for fire extinguishment are branched from the lower end of the main power circuit breaker. The danger of the loss of the effectiveness of the installation of the private generator for fire extinguishment according to the over capacity of the generator is caused in the same manner as FIG.3.

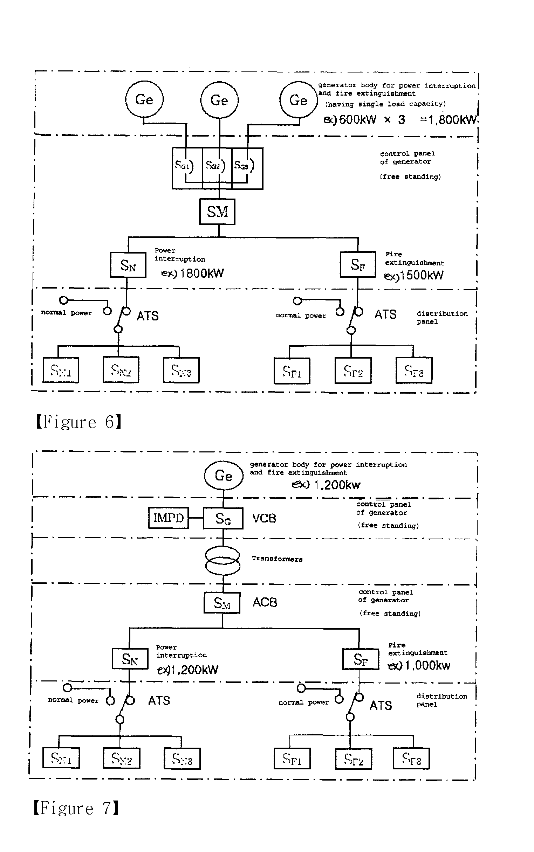

FIG.6 shows still another private generator system having a single capacity which is capable of supplying emergency power at the time of power interruption according to conventional practices. The system is similar to as in FIG.3, but in this configuration, a high voltage private generator is installed. A VCB as a high voltage circuit breaker and a transformer are installed between the generator body and the main power circuit breaker as shown in FIG.3, and a circuit breaker for power interruption and a circuit breaker for fire extinguishment are branched from the lower end of the transformer. The danger of the loss of the effectiveness of the installation of the private generator for fire extinguishment according to the over capacity of the generator is caused in the same manner as FIG.3.

In case of installing the high voltage private generators as shown in FIGS.4 and 5, the high voltage power is directly connected to the loads, but generally, a low voltage load is wholly or partially contained. If power is supplied to the low voltage load, the high voltage vacuum circuit breaker and the transformer are installed between the circuit breaker of the generator and the main power circuit breaker. In case where the capacity of the generator as the single load capacity is selected in the generators as shown in FIGS.3 to 6, the lack of capacity is caused, such that the main power circuit breaker is opened (tripped) by the overload of the generator at the time of power interruption and fire extinguishment, thereby causing the loss of the effectiveness of the installation of the private generator for fire extinguishing facilities. This fails to satisfy the regulations on the installation of the private generator in the fire extinguishing facilities and causes dangers by the fire.

The reasons why the above-mentioned problems are not revealed up to now are as follows:
Firstly, the power capacity of the fire extinguishing facilities in view of design is calculated by a designer of fire mechanical engineering, and the capacity of the emergency power of the emergency generator is calculated by a designer of electrical equipment. In this case, the two designers have no interference or
contact with each other in their working scope, and also they do not know well the work of their counter parts. Thus, the working area and the responsibility in the application of the capacity of the private generator according to the characteristics of the fire extinguishing facilities become dead zone, which makes it difficult to reveal the problem.

Secondly, in view of test operation, the test operation after the site construction of the private generator is performed by just checking the starting and operating states of the generator and the rotating direction of power equipment, and since the test is conducted in the states of no load or partial load of the generator, the lack of capacity is not revealed during the test.

Thirdly, in view of coping with fire, normal fire is generally extinguished before the switching to emergency power. Also, even though fire breaks out during power interruption or even though power interruption breaks out during fire, the fire is early extinguished at the initial step where the power interruption load and the fire extinguishment load are not full loads, and in this case, the fire extinguishing facilities are gently started in the partial load state of the power load of emergency power to achieve the fire extinguishment, which makes it difficult to reveal the problem of the lack of the capacity of the generator. Fourthly, in view of the conditions of exposure of the reasons of fire accidents, the fire extinguishment load is increased by the development of fire, and the device of protecting the generator is operated by the generation of the overload of the capacity of the generator to cause the main power circuit breaker to be opened, thereby stopping the supply of power. In this case, the fire extinguishment fails by the stopping of the functions of the fire extinguishing facilities, thereby expanding the fire area. Even in this case where the lack of capacity of generator is caused, if the generator is recovered and re-started, it is operated without any trouble, which is not considered as the reasons of the failure of fire extinguishment, thereby making it difficult to reveal the problem.

Fifthly, in view of investigating fire accidents, even though the problem in the capacity of generator occurs in the classification of the kinds and patterns of accidents, the investigation is simply finished by suggesting the failure of the operation of the fire extinguishing facilities. In this case, no items of generator about the factors or kinds of the expansion of fire are provided, thereby making it difficult to reveal the problem.

These problems in the application of the generator having a single capacity are almost not revealed, but they exist as major danger factors causing the stop of the supply of emergency power necessary for the activation of the fire extinguishing facilities at emergency states, which actually violates the regulations on the fire extinguishment where emergency power should be prepared.

### [Disclosure]

### [Technical Problem]

Accordingly, the present invention has been made in view of the above-mentioned problems occurring in the prior art, and it is an object of the present invention to provide a private generator for power interruption and fire extinguishment having an automatic switching function to fire extinguishment wherein the private generator has a single load capacity and is automatically operated to supply a power interruption load and a fire extinguishment load if the supply of normal power stops by a fire station or power company so as to effectively perform fire extinguishment when a fire breaks out during power interruption or the fire is developed, and wherein the private generator has a device adapted to open a circuit breaker for power interruption before a main power circuit breaker is operated by overload as the fire extinguishment load is increased during the operation of the generator, and alternatively, the private generator has an operating system disposed therein so as to open the circuit breaker for power interruption together with the operation of the fire extinguishing facilities.

It is another object of the present invention to provide a private generator for power interruption and fire extinguishment having an automatic switching function to fire extinguishment wherein the private generator supplies a power interruption load at the time of normal power interruption and is switched only to fire extinguishment when a fire breaks out or the fire is developed to supply a fire extinguishment load, and alternatively, the private generator supplies the power interruption load and the fire extinguishment load at the same time and primarily supplies the power load for fire extinguishment if overload happens, thereby stopping the supply of the power interruption load, such that the safety from the fire in buildings is ensured and the economical advantages are provided.

### [Technical Solution]

To achieve the above objects, according to the present invention, there is provided a private generator for power interruption and fire extinguishment having an automatic switching function to fire extinguishment, the private generator being used as an emergency power generator available during power interruption of normal power and including: a measuring instrument adapted to sense the variations of a load on a power line via a main power circuit breaker; and a control instrument connected to the measuring instrument at an input side thereof and connected to a circuit breaker for power interruption disposed at the lower end of the main power circuit breaker at an output side thereof, wherein if a power load of the generator reaches a set value during the operation of the generator, the control instrument is operated by the value of the power load on the power line sensed by the measuring instrument, before the main power circuit breaker is operated, to open the circuit breaker for power interruption, thereby providing a control function of keeping the main power circuit breaker from being broken before the breaking of the circuit breaker for power interruption.

To achieve the above objects, according to the present invention, there is provided a private generator for power interruption and fire extinguishment having an automatic switching function to fire extinguishment wherein the private generator opens all of circuit breakers for power interruption through interlocking by fire signals generated from fire extinguishing facilities, thereby keeping the power for fire extinguishment therein.

To achieve the above objects, according to the present invention, there is provided a private generator for power interruption and fire extinguishment having an automatic switching function to fire extinguishment, the private generator including: a measuring instrument disposed on a power line of the generator so as to sense the variations of current or power thereon; and a control instrument connected to the measuring instrument at an input side thereof and connected to a circuit breaker for power interruption at an output side thereof, wherein after overload is sensed through the measuring instrument during the operation of the generator, the control instrument is operated by a previously set value of the power load before the main power circuit breaker is opened by an over current relay operated at a predetermined overload (generally, which 110% of emergency load and 120% of rated load), to break the circuit breaker for power interruption at the moment where fire breaks out (in this case, the overload is in the range from 0% to 30%), to supply the power interruption load and the fire extinguishment load at the same time at the time of fire generation and to break the circuit breaker for power interruption upon generation of overload (in this case, the overload is arbitrarily set in the range from 0% to 150% and for example, the overload is set one time to 100% or 110% of the rated load or set step by step to 100%, 105% and 110%).

Alternatively, the circuit breaker for power interruption which is provided inside or outside the control panel is opened by a fire signal generated by the operation of the fire extinguishing facilities when a fire breaks out, or a plurality of branch circuit breakers for power interruption branched from the lower end of the circuit breaker for power interruption are sequentially opened, thereby providing a primary breaking condition for power interruption load wherein the main power circuit breaker is not broken before the circuit breaker for power interruption and the branch circuit breakers for power interruption are broken.

According to a first aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; and a control instrument connected to the measuring instrument at an input side thereof and connected to the circuit breaker for power interruption at an output side thereof, such that when the value of the variations of the power load inputted from the measuring instrument reaches a predetermined set value, the circuit breaker for power interruption is primarily broken, thereby keeping the main power circuit breaker from being broken before the breaking of the circuit breaker for power interruption, wherein a power interruption load and a fire extinguishment load are at the same time supplied until the private generator reaches an overload state during fire, and the supply of the fire extinguishment load is primarily kept during the development of fire. According to a second aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; and a control instrument connected to the output side of the measuring instrument at an input side thereof and connected at an output side thereof to a plurality of branch circuit breakers for power interruption branched from the lower end output side of the circuit breaker for power interruption, such that when the value of the variations of the power load inputted from the measuring instrument reaches a predetermined set value, the branch circuit breakers for power interruption are sequentially broken, thereby keeping the main power circuit breaker from being broken before the breaking of all of the branch circuit breakers for power interruption, wherein a power interruption load and a fire extinguishment load are at the same time supplied until the private generator reaches an overload state during fire and the supply of the fire extinguishment load is primarily kept during the development of fire. According to a third aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; and a control instrument connected to the output side of the measuring instrument at an input side thereof and connected at an output side thereof to the circuit breaker for power interruption and a part of a plurality of branch circuit breakers for power interruption branched from the lower end output side of the circuit breaker for power interruption, such that when the value of the variations of the power load inputted from the measuring instrument reaches a predetermined set value, the part of the branch circuit breakers for power interruption are sequentially broken and the circuit breaker for power interruption is finally broken, thereby keeping the main power circuit breaker from being broken before the breaking of the circuit breaker for power interruption, wherein a power interruption load and a fire extinguishment load are at the same time supplied until the private generator reaches an overload state during fire and the supply of the fire extinguishment load is primarily kept during the development of fire.

According to a fourth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; a control instrument connected to the output side of the measuring instrument at an input side thereof; a control line part for supplying control power to a trip terminal of the circuit breaker for power interruption under the control of the control instrument; and an auxiliary control instrument connected to the output side of the control instrument, the control line to which the control power is supplied and the circuit breaker for power interruption, such that when the value of the variations of the power load inputted from the measuring instrument reaches a predetermined set value, the circuit breaker for power interruption is primarily broken by the control of the control instrument, thereby keeping the main power circuit breaker from being broken before the breaking of the circuit breaker for power interruption, wherein the circuit breaker for power interruption is broken at a set over current value by the control power, thereby keeping the main power circuit breaker from being broken before the breaking of the circuit breaker for power interruption, and a power interruption load and a fire extinguishment load are at the same time supplied until the private generator reaches an overload state during fire, thereby primarily keeping the supply of the fire extinguishment load during the development of fire.

According to a fifth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; a control instrument connected to the output side of the measuring instrument at an input side thereof; a control line part for supplying control power to a trip terminal of the circuit breaker for power interruption under the control of the control instrument; and an auxiliary control instrument connected to the output side of the control instrument, the control line to which the control power is supplied, and a plurality of branch circuit breakers for power interruption branched from the lower end output sides of the circuit breaker for power interruption, such that when the value of the variations of the power load inputted from the measuring instrument reaches a predetermined set value, the plurality of branch circuit breakers for power interruption are sequentially broken by the control of the control instrument, thereby keeping the main power circuit breaker from being broken before the breaking of all of the plurality of branch circuit breakers for power interruption, wherein the plurality of branch circuit breakers for power interruption are broken at a set over current value by the control power, thereby keeping the main power circuit breaker from being broken before the breaking of the branch circuit breakers for power interruption, and a power interruption load and a fire extinguishment load are at the same time supplied until the private generator reaches an overload state during fire, thereby primarily keeping and the supply of the fire extinguishment load during the development of fire.

According to a sixth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line; a control instrument connected to the output side of the measuring instrument at an input side thereof; a control line part for supplying control power to a trip terminal of the circuit breaker for power interruption under the control of the control instrument; and an auxiliary control instrument connected to the output side of the control instrument, the control line to which the control power is supplied, a part of a plurality of branch circuit breakers for power interruption branched from the lower end output sides of the circuit breaker for power interruption, and the circuit breaker for power interruption, such that when the value of the variations of the power load inputted from the measuring instrument reaches a predetermined set value, the plurality of branch circuit breakers for power interruption are sequentially broken and the circuit breaker for power interruption is finally broken by the control of the control instrument, thereby keeping the main power circuit breaker from being broken before the breaking of the circuit breaker for power interruption, wherein the plurality of branch circuit breakers for power interruption are broken at a set over current value by the control power, thereby keeping the main power circuit breaker from being broken before the breaking of the part of the plurality of branch circuit t breakers for power interruption and the circuit t breaker for power interruption, and a power interruption load and a fire extinguishment load are at the same time supplied until the private generator reaches an overload state during fire, thereby primarily keeping the supply of the fire extinguishment load during the development of fire.

According to a seventh aspect of the present invention, there is provided a private generator for power interruption and fire extinguishment having an automatic switching function to fire extinguishment, the private generator being used as an emergency power generator available during power interruption of normal power and having a main power circuit breaker and a line for power interruption and a line for fire extinguishment branched from the lower end of the main power circuit breaker, the private generator including: a measuring instrument adapted to sense the variations of a power load on a main power line; an automatic load circuit breaker or an automatic load transfer switch connected to a power interruption line and a fire extinguishment side line or to respective automatic transfer switches; and a control instrument connected to the measuring instrument at an input side thereof and connected to the automatic load circuit breaker or the automatic load transfer switch at an output side thereof, such that when the value of the variations of the power load on the main power line reaches a predetermined set value, the supply of a power interruption load is automatically stopped to primarily break the power interruption line at the time of the generation of fire, thereby keeping the main power circuit breaker from being broken before the breaking of the power interruption line, wherein a power interruption load and a fire extinguishment load are at the same time supplied until the private generator reaches an overload state during fire and the supply of the fire extinguishment load is primarily kept during the development of fire.

According to an eighth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: the main power circuit breaker for embedding a measuring instrument adapted to sense the variations of a power load on a main power line and an over current relay as a control instrument connected to the measuring instrument therein, so as to provide an output contact to an alarming terminal or an output terminal of an auxiliary over current relay separately installed at a set over current value; and a control line part for supplying control power to a trip terminal of the circuit breaker for power interruption through a reserve output terminal as the alarming terminal and the separate output terminal for alarming the over current of the main power circuit breaker, wherein the circuit breaker for power interruption is broken at an over current value set at the control instrument through the supply of the control power to the control line, thereby keeping the main power circuit breaker from being broken before the breaking of the circuit breaker for power interruption, and a power interruption load and a fire extinguishment load are at the same time supplied until the private generator reaches an overload state during fire, thereby primarily keeping the supply of the fire extinguishment load during the development of fire.

According to a ninth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: the main power circuit breaker for embedding a measuring instrument adapted to sense the variations of a power load on a main power line and an over current relay as a control instrument connected to the measuring instrument therein, so as to provide an output contact to an alarming terminal or an output terminal for an auxiliary reserve over current relay at a set over current value; a control line part for supplying control power to a trip terminal of the circuit breaker for power interruption through a reserve output terminal as the over current alarming terminal of the main power circuit breaker; and an auxiliary control instrument connected to the main power circuit breaker, the control line part to which the control power is supplied, and the circuit breaker for power interruption, such that when the value of the variations of the power load inputted from the measuring instrument reaches a predetermined set value of the control instrument, the circuit breaker for power interruption is primarily broken, thereby keeping the main power circuit breaker from being broken before the breaking of the circuit breaker for power interruption, wherein a power interruption load and a fire extinguishment load are at the same time supplied until the private generator reaches an overload state during fire and the supply of the fire extinguishment load is primarily kept during the development of fire.

According to a tenth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a contact part operated by the operation of the fire extinguishing equipment for fire extinguishing facilities installed via a branch circuit breaker for fire extinguishment disposed at the lower end of the circuit breaker for fire extinguishment; and an interlocking device connected to the contact part through a control line and to the circuit breaker for power interruption, wherein the circuit breaker for power interruption is primarily broken by means of interlocking through the operation of the fire extinguishing equipment when a fire breaks out, such that the main power circuit breaker is kept from being broken before the breaking of the circuit breaker for power interruption, thereby keeping the supply of fire extinguishment power.

According to an eleventh aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a fire signal generating device for generating a fire signal detected by the operation of fire extinguishing equipment disposed via a branch circuit breaker for fire extinguishment installed at the lower end of the circuit break for fire extinguishment; and a control instrument for supplying control power to break the circuit breaker for power interruption by the generation of the fire signal, thereby primarily breaking the circuit breaker for power interruption when the fire breaks out, such that the main power circuit breaker is kept from being broken before the breaking of the circuit breaker for power interruption, thereby keeping fire extinguishment power therein.

According to a twelfth aspect of the present invention, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: an auxiliary contact part operated by the operation of a fire extinguishment motor switch of fire extinguishing facilities disposed via a branch circuit breaker for fire extinguishment installed at the lower end of the circuit breaker for fire extinguishment; and a trip terminal part connected to the auxiliary contact switch through a control line and embedded in the circuit breaker for power interruption, wherein the circuit breaker for power interruption is primarily broken by the supply of control power through the auxiliary contact part operated by the operation of the fire extinguishment motor switch, when a fire breaks out, such that the main power circuit breaker is kept from being broken before the breaking of the circuit breaker for power interruption, thereby keeping fire extinguishment power therein.

According to the present invention, preferably, the contact part operated by the operation of the fire extinguishing equipment or the fire signal generating device includes one of a relay of automatic fire detection equipment, a fire signal device of a receiver unit, a water pressure switching device for starting a fire pump outputting a signal upon driving, a discharge signal device of a water flow indicator, a monitoring control panel for a fire pump, an operation display device of a power control panel, and a tamper switch of a water pipe of automatic water-based fire extinguishing equipment.

According to the present invention, preferably, the private generator further includes a display device adapted to receive the control power through the control line and connected to the circuit breaker for power interruption, for displaying the switching state to fire extinguishment on a display lamp, a display window, or a screen with one or more of characters, symbols, and patterns at an area on which the generator is installed or controlled remotely.

According to the present invention, preferably, the private generator further includes a control switch connected to the main power circuit breaker and the circuit breaker for power interruption so as to selectively break the circuit breaker for power interruption and the circuit breaker for fire extinguishment, thereby performing a switching control test to fire extinguishment and a returning test to an original state.

According to the present invention, preferably, the measuring instrument includes one of a current transformer (CT) and a power transformer (PT).

According to the present invention, preferably, each of the measuring instrument and the control instrument includes one of a digital total power controller, an intelligent communication & measuring device, a digital multi power meter, an intelligent measuring & protection device for feeder, and a maximum power load controller.

According to the present invention, preferably, each of the control instrument and the auxiliary control instrument includes one of a generator controller, a programmable logic controller (PLC), a microcomputer (MICOM), a central processing unit (CPU), a personal computer (PC), a direct digital controller (DDC), a distributed control system (DCS), a distributed operated console (DOC), a supervisory control and data acquisition (SCADA), an application specific integrated circuit (ASIC), and an application specific instruction processor (ASIP).

According to the present invention, preferably, each of the control instrument and the auxiliary control instrument includes one of a single or a plurality of over current relays (OCR), over power relays (OPR), electronic over current relays (EOCR), meter relays, watt meters, watt-hour meters, var meters, var-hour meters, ammeters, digital multi power meters, digital relays, inductive relays, thermal relays, and control relays.

According to the present invention, preferably, the set value of the control instrument is set with one or two or more values in the range from 0% to 150% of the rated load so as to break the circuit breaker for power interruption before the main power circuit breaker is broken by the overload of the main power line upon the power interruption at the state of fire or upon the generation of fire at the state of the power interruption, such that the power interruption load and the fire extinguishment load are supplied at the same time from an initial step of the fire, before the private generator reaches an overload state. According to the present invention, preferably, the set value of the control instrument is set with one value in the range from 0% to 30% of the rated load so as to break the circuit breaker for power interruption before the main power circuit breaker is broken by the overload of the main power line upon the power interruption at the state of fire or upon the generation of fire at the state of the power interruption, such that the power interruption load is broken at the time of generation of fire, thereby keeping fire extinguishment power therein.

### [Advantageous Effects]

According to the present invention, there is provided the private generator having an automatic switching function to fire extinguishment that has a single capacity and is operated for both of power interruption and fire extinguishment, thereby being switched to the function for power interruption at the time of power interruption and to the function for fire extinguishment at the time of generation of fire.

Moreover, in case where the control of the generator is performed by the variations of a power load, the power interruption load is supplied at the time of power interruption, the power interruption load and the fire extinguishment load are supplied at an initial step where power interruption breaks out during fire, and the fire extinguishment load is gradually increased as time is passed, such that if the variation value of the power load reaches a current value or load value set near the rated load or emergency load of the generator, the supply of the power interruption load is stopped partially or sequentially, thereby providing conveniences in their activities to the residents in the building at the initial step of the fire, providing safe escaping results to them, and continuously supplying the fire extinguishment power.

Since a safety problem is very important in the field of fire extinguishment, the generator should have high reliability. The generator has a function of a maximum power management device that is recommended to be installed in a building having a predetermined size to provide the advantage of the reduction of the power consumption cost, which controls a peak power load in summer seasons where cooling and heating systems are activated in normal power equipment to provide the safety in the generation and substation equipment of power source supply companies and to improve the reliability in distribution systems on the basis of the allowance rate of power, but which is different from a monitoring control system for normal power that is arbitrarily selected and adopted in a super large-sized intelligent building. The present invention relates to the self-power generator as an emergency power generator that is needed to provide safety conditions to the fire extinguishing facilities and to basically and structurally provide safety conditions in fire extinguishment to private generation equipment. Accordingly, in case where the private generator having the automatic switching function to fire extinguishment according to the present invention has a primary breaking function for the power interruption load when fire breaks out, it can satisfy the safety conditions as mentioned above, thereby allowing the safety in the fire extinguishment to be checked through fire extinguishment-related persons, the supervisory authorities under jurisdiction, and the primary agencies of public affairs, thereby permitting the fire extinguishment power-keeping performance through the automatic switching to the fire extinguishment to be primarily verified when the fire extinguishment-related persons are present before the marketing of the generator after the generator has been manufactured by the manufacturer, and thereby allowing the checking by naked eyes by providing a performance test or an operation test through a tester of an overload relay or the operation of the fire extinguishing facilities on the site having predetermined conditions. Thus, reliable safety results are provided to give economical advantages, which enables the generator of the present invention to be adopted through the guidance of the government or systematically.

In view of economical efficiencies, normally, since the single load capacity is about 60% of the added load capacity, the capacity of about 40% is reduced, but if the added extra cost of about 10% in the manufacturing process of the present invention is subtracted therefrom, the installation cost of about 30% is reduced. Referring to the whole domestic market, the domestic generator market in 2007 has the market size of about 9,249 billion dollars according to the ninth revision of mining and manufacturing, energy mining, and manufacturing survey in the subject statistics of KOSIS (Korean Statistical Information Service). The diesel generators for emergency power have the market size of about 3,000 billion dollars to 4,000 billion dollars, and the middle or large-sized generators having a single load capacity in buildings used for power interruption and fire extinguishment have the market size of about 2,000 billion dollars. If the added load capacity satisfying the power interruption and fire extinguishment to be adopted by the revision of laws is calculated, the increase of about 60% to 2,000 billion dollars becomes about 3,300 billion dollars by the increase of the generator capacity. Of course, the added load capacity is partially adopted by the preference of a designer or user according to the revision of the standards, but if the replacement with the generator according to the present invention is achieved, the reduction rate of 30% is adopted to the installation cost of 3,300 billion dollars, about 1,000 billion dollars every year are really reduced to give economical saving effects to national industrial economy and to economically remove dangerous factors, thereby providing the reduction of construction cost to demanders and giving high safety and safe social structures.

### [Description of Drawings]

FIG.1 is a schematic circuit diagram showing an emergency generator for power interruption and a generator for fire extinguishment installed independently of each other according to conventional practices, each of the generators supplying the respective required loads.
FIG.2 is a schematic circuit diagram showing a single private generator system which is capable of supplying emergency power at the time of power interruption according to conventional practices.
FIG.3 is a schematic circuit diagram showing a private generator system having a single capacity which is capable of supplying emergency power at the time of power interruption according to conventional practices.
FIG.4 is a schematic circuit diagram showing another private generator system having a single capacity which is capable of supplying emergency power at the time of power interruption according to conventional practices.
FIG.5 is a schematic circuit diagram showing yet another private generator system having a single capacity which is capable of supplying emergency power at the time of power interruption according to conventional practices.
FIG.6 is a schematic circuit diagram showing still another private generator system having a single capacity which is capable of supplying emergency power at the time of power interruption according to conventional practices.
FIGS.7 to 26 are schematic circuit diagrams showing private generators having an automatic switching function to fire extinguishment according to the preferred embodiments of the present invention.

### [Best Mode]

An explanation on a private generator having an automatic switching function to fire extinguishment according to the preferred embodiments of the present invention will be given in detail with reference to the attached drawings.

### [Mode for Invention]

FIGS.7 to 26 are schematic circuit diagrams showing private generators having an automatic switching function to fire extinguishment according to the preferred embodiments of the present invention. According to the present invention, the basis drawing before the construction of the control line of the drawings of the present invention is FIG.3, and the basis drawings at the time of the construction of the control line of the present invention are FIGS.4, 5 and 6.

In case of a high voltage generator, however, a vacuum circuit breaker (VCB) is used as a main power circuit breaker, and in this case, a power monitoring and protecting device like a multi-functional integrated digital protection relay to which a current transformer (CT) and an over current relay (OCR) are connected is installed near the VCB, for controlling the VCB. In case of the VCB, the construction of the control line according to the present invention is connected by means of the power monitoring and protecting relay, which is the same as the construction of an air circuit breaker (ACB) in case of the ACB of the main power circuit breaker for low voltage. In the preferred embodiments of the present invention, the repetition of the explanations on the same reference numerals as each other in the drawings will be avoided.

Under the condition where the private generator is used for power interruption and fire extinguishment, the private generator having an automatic switching function to fire extinguishment according to the present invention includes a main power circuit breaker (in case of a parallel operating system, a main power circuit breaker installed at the lower end of a generator breaker), a circuit breaker for power interruption and a circuit breaker for fire extinguishment branched from the lower end of the main power circuit breaker, and a power interruption line and a fire extinguishment line installed via the circuit breaker for power interruption and the circuit breaker for fire extinguishment on a distribution panel and a panel board or a power control panel, which are provided as power equipment and fire extinguishing facilities in a building. An automatic transferring switch, which automatically transfers power by the operation of a low voltage relay at the time of power interruption of normal power to an emergency power line of the generator, is installed at rear ends or front ends of the circuit breaker for power interruption and the circuit breaker for fire extinguishment, and in a state where an emergency power is supplied to the loads branched via a single or a plurality of branch circuit breakers for power interruption and a single or a plurality of branch circuit breakers for fire extinguishment branched at the lower end of the automatic transferring switch, the branch circuit breakers for power interruption are primarily broken at the time of the power interruption and the generation of fire, thereby keeping the fire extinguishment power requiring absolute supply.

Referring to FIGS.7 to 26, there is provided a private generator for power interruption and fire extinguishment having an automatic switching function to fire extinguishment, the private generator being used as an emergency power generator available during power interruption of normal power and having a main power circuit breaker disposed at the lower end of a generator body, and a circuit breaker for power interruption and a circuit breaker for fire extinguishment branched from the lower end of the main power circuit breaker, wherein fire conditions are sensed and the circuit breaker for power interruption is opened on set conditions, thereby allowing the connection between the main power circuit breaker and the circuit breaker for fire extinguishment to be maintained to keep the fire extinguishment power. The fire-sensing conditions include sensing the variation of a power load or a fire signal generated from the fire extinguishing facilities, and they are controlled through a measuring instrument, through the measuring instrument and a control instrument, or only by the construction of the control line. As one of most useful methods, there is a system for sensing the variations of the power load. In more detail, a current or power measuring instrument is installed from the main power line of the generator so as to sense the current value or power value, and the control instrument is operated when the sensed value reaches a previously set value so as to primarily open the circuit breaker for power interruption. At the time of power interrupt ion of normal power, the generator is automatically operated, and the automatic transferring switch (ATS) is operated to supply emergency power to a power interruption load and a fire extinguishment load. At the time of normal power interruption, the emergency power of the generator has a power line through which the generator power is supplied to the respective loads through the main power circuit breaker SM and through the circuit breaker for power interruption SN and the circuit breaker for fire extinguishment SF. By the way, the power interruption load is first supplied at the time of normal power interruption, and the power interruption load and the fire extinguishment load are at the same time supplied at the time of power interruption during fire. As the fire is developed by the lapse of time, the two loads or the fire extinguishment load are (is) increased, such that if the whole load capacity is near the load breaking the main power circuit breaker, the main power circuit breaker SM is primarily broken by the added loads on the branched lines. Before the main power circuit breaker SM is broken, so as to primarily break the circuit breaker for power interruption SN for supplying the emergency load for power interruption composed of a part of loads for cooling and heating, sanitation, kitchen, air-conditioning, light, electric heating, cold energy, elevator, and escalator as convenience facilities during the power interruption of normal power, the control line of the control instrument is constructed through the output contact of the control instrument, thereby supplying control power to the circuit breaker for power interruption to break the circuit breaker for power interruption.

In case where the control is conducted with the load value on the main power line, the whole load condition or the overload having set conditions is applied to break the circuit breaker for power interruption, thereby testing the automatic transferring to the fire extinguishment by means of an OCR tester.

In case where the control is conducted with the fire signal generated from the fire extinguishing facilities, the control power is supplied to a trip terminal of the circuit breaker for power interruption by means of interlocking through the operation of the fire extinguishing equipment of the fire extinguishing facilities, thereby breaking the circuit breaker for power interruption.

In the state where the main power circuit breaker is not opened before the breaking of the circuit breaker for power interruption, the fire extinguishment power is safely supplied and the fire is extinguished by the continuous operation of the fire extinguishing equipment, thereby providing the safety of fire extinguishment and economical advantages.

The private generator is composed of three components, that is, an engine, a body, and a control panel (which is called an operating panel or a manipulating panel), and the control panel is manufactured as a built-in control panel for small-sized generators, a bonnet control panel for a fire compartment package or for prevention of noises, and a free standing (self standing) control panel for middle or large-sized generators. The present invention is applicable to all types of generators, and more preferably, the present invention is provided with the free standing control panel. If the main power circuit breaker is ACB and the circuit breakers for power interruption and fire extinguishment are MCCB, they are housed on one panel, and contrarily, if all of them are ACB, the control panel is formed of two panels.

The construction of the equipment related to the present invention or the line construction thereof has a relation with the control panel, and in case of the free standing control panel having a housing space therein, the control instrument and the circuit breaker for power interruption are housed in the interior of the control panel and connected thereinto. However, even if the free standing control panel is provided in a state where the control instrument and the circuit breaker for power interruption are exteriorly mounted on the distribution panel, or even in case of the built-in control panel and the bonnet control panel, the connecting terminals between the measuring instrument installed or connected to the generator and the control instrument installed on the distribution panel disposed on the outside of the control panel are provided in a connection terminal box of the control panel (manipulating panel), thereby constructing the control line through the connection on the site. Further, in case of the control instrument remotely controlled from the outside, the control of a short distance is effectively conducted by the control line, and the control of a long distance by a communication line. The control by the communication line is conducted wirely or wirelessly. Referring to FIG.7, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line via the main power circuit breaker; and a control instrument connected to the measuring instrument at an input side thereof and connected to the circuit breaker for power interruption at an output side thereof, such that when the value of the variations of the power load inputted from the measuring instrument reaches a predetermined set value, the circuit breaker for power interruption is primarily broken, thereby keeping the main power circuit breaker from being broken before the breaking of the circuit breaker for power interruption.

The power of the generator Ge is passed through the main power circuit breaker SM on the control panel and is branched at the lower end of the main power circuit breaker SM to the circuit breaker SN for power interruption and the circuit breaker SF for fire extinguishment. The respective lines are passed through the automatic transfer switch ATS installed on the distribution panel on the outside of the control panel for automatically switching the normal power to the emergency power at the time of power interruption and are then passed through a single or a plurality of branch circuit breakers SN1, SN2 and SN3 for power interruption and a single or a plurality of branch circuit breakers SF1, SF2 and SF3 for fire extinguishment installed on the distribution panel, thereby supplying the emergency power to the respective loads. The self-power generator includes the measuring instrument installed on the main power line of the generator so as to sense the variations of the load thereon, and the control instrument connected at one end thereof to the measuring instrument and providing a contact to a trip terminal of the circuit breaker SN for power interruption at the other end thereof. When the generator is operated, the load is measured through the measuring instrument, and if the current or power value on the main power line is high by the activation of the fire extinguishment facilities upon the generation of fire, the control instrument is operated by a set load value lower than a load value by which the over current relay of the main power circuit breaker SM is operated and opened, thereby allowing the circuit breaker SN for power interruption to be opened, such that at the state where the main power circuit breaker SM and the circuit breaker SF for fire extinguishment are being in the connected state, the emergency fire extinguishing power is continuously supplied.

The control instrument is provided to add circuits to an existing generator controller, and alternatively, the control instrument mounted internally or externally on the control panel is separately provided, which is remotely controlled through communication of RS485 standard. In this case, the short distance is controlled by the construction of the control line, and the long distance is by the construction of LAN or the like. Since the control power is supplied directly from the control instrument, however, the control instrument should have sufficient contact capacity (e.g., 5A to 10A or more).

According to the present invention, most of fires are extinguished at their initial step by the fire extinguishing facilities, and therefore, the power interruption load and the fire extinguishment load are supplied all at the time of fire extinguishment at the initial step of the fire and during fire, thereby providing conveniences in the activities of the residents of the building during that time, helping their escaping from fire, and safely supplying the fire extinguishment load for the fire extinguishing facilities.

Moreover, the measuring instrument may be installed on the fire extinguishment line for the convenience of the construction of the control line, which is more advantageously applied to a place where the simultaneous supply of the power interruption load and the fire extinguishment load is not needed necessarily. In this case, the variations of the current value on the fire extinguishment line are measured through the measuring instrument so as to check only whether fire breaks out. Accordingly, the set load value of the control instrument is very low, and at the moment where the fire breaks out, the switching function to fire extinguishment is performed.

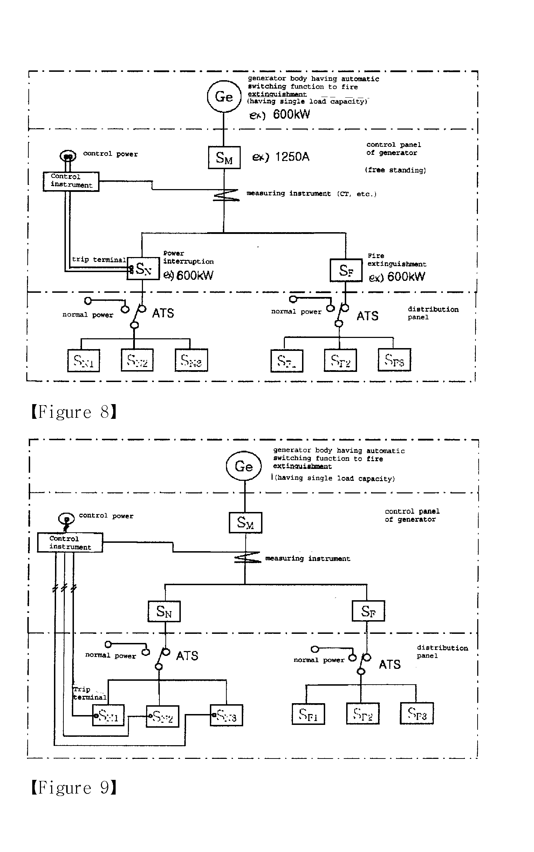

FIG.8 shows a private generator having an automatic switching function to fire extinguishment according to another preferred embodiment of the present invention, which is almost similar to FIG.7, except that the supply of the power interruption load stops by means of the plurality of branch circuit breakers SN1, SN2 and SN3 for power interruption disposed at the lower end of the circuit breaker SN for power interruption. In the preferred embodiment of the present invention, advantageously, the plurality of branch circuit breakers SN1, SN2 and SN3 for power interruption is not broken at one time, but they are step by step broken, which further extends the time of the supply of the power interruption power for the remaining power interruption loads.

FIG.9 shows a private generator having an automatic switching function to fire extinguishment according to yet another preferred embodiment of the present invention, which is almost similar to FIG.7, except that the supply of the power interruption load stops by means of the circuit breaker SN for power interruption and a part of the plurality of branch circuit breakers SN1, SN2 and SN3 for power interruption disposed at the lower end of the circuit breaker SN for power interruption. In the preferred embodiment of the present invention, advantageously, in case where the number of the branch circuit breakers for power interruption is large to cause the construction of the lines to be hard, the supply of major loads is primarily stopped step by step through the part of the plurality of branch circuit breakers SN1 and SN2 for power interruption and finally stopped through the circuit breaker SN for power interruption, which further extends the time of the supply of the power interruption power through the step by step stop of the power interruption loads.

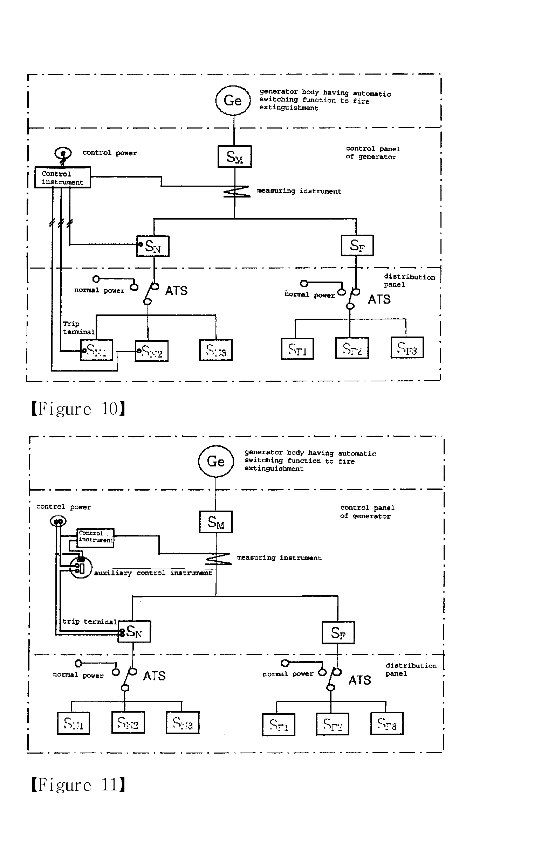

FIG.10 shows a private generator having an automatic switching function to fire extinguishment according to still another preferred embodiment of the present invention, which is almost similar to FIG.7. In the preferred embodiment of the present invention, advantageously, in case where the control instrument does not have a sufficient contact capacity, an auxiliary control instrument like a relay is adopted to improve safety or to provide an auxiliary function like additional displaying. The auxiliary control instrument is disposed inside or outside the control panel.

FIG.11 shows a private generator having an automatic switching function to fire extinguishment according to still another preferred embodiment of the present invention, which is almost similar to FIG.8. In the preferred embodiment of the present invention, advantageously, in case where the control instrument has a lacking contact capacity, a plurality of auxiliary control instruments like a relay is adopted to improve safety or to provide an auxiliary function like additional displaying. The auxiliary control instruments are disposed inside or outside the control panel.

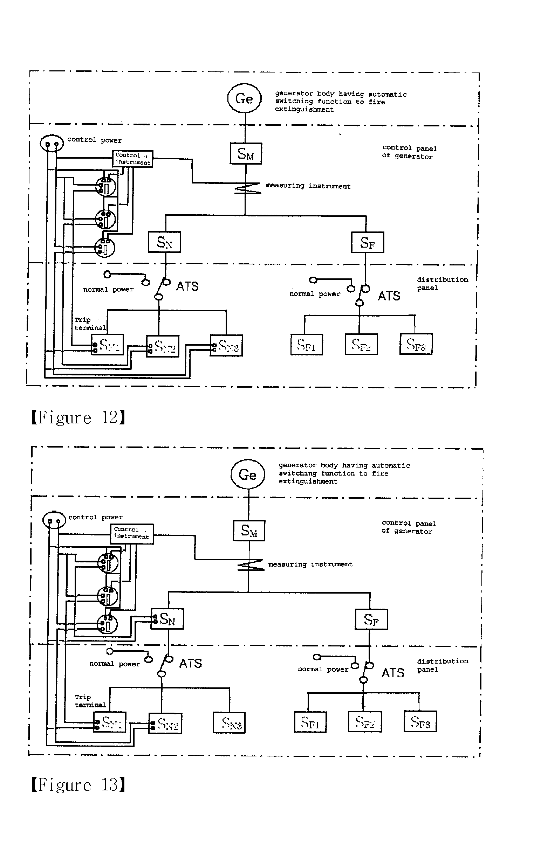

FIG.12 shows a private generator having an automatic switching function to fire extinguishment according to yet still another preferred embodiment of the present invention, which is almost similar to FIG.9. In the preferred embodiment of the present invention, advantageously, in case where the control instrument has a lacking contact capacity, a plurality of auxiliary control instruments like a relay is adopted to improve safety or to provide an auxiliary function like additional displaying. The auxiliary control instruments are disposed inside or outside the control panel.

FIG.13 shows a private generator having an automatic switching function to fire extinguishment according to still another preferred embodiment of the present invention, which is almost similar to FIG.7. In the preferred embodiment of the present invention, advantageously, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a measuring instrument adapted to sense the state of the generation of fire by the variations of a power load on a main power line via the main power circuit breaker; and a control instrument connected to the measuring instrument at an input side thereof and connected to the circuit breaker for power interruption at an output side thereof, such that when the value of the variations of the power load inputted from the measuring instrument reaches a predetermined set value, the circuit breaker for power interruption is primarily broken, thereby keeping the main power circuit breaker from being broken before the breaking of the circuit breaker for power interruption.

The control instrument includes all kinds of relays like a digital relay and supplies the power interruption load at the time of normal power interruption and supplies all of the power interruption load and the fire extinguishment load at the time of power interruption during fire. After that, if the generator is at an overload state, only the fire extinguishment load is supplied. The installation of this generator is relatively simple and is easily applied to existing generators.

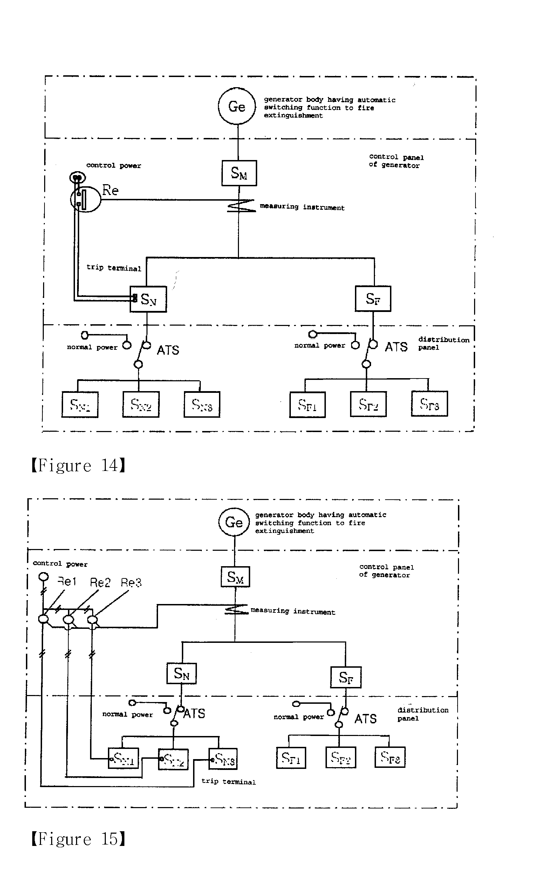

FIG.14 shows a private generator having an automatic switching function to fire extinguishment according to another preferred embodiment of the present invention, which is almost similar to FIG.13, except that the supply of the power interruption load stops by means of the plurality of branch circuit breakers SN1, SN2 and SN3 for power interruption disposed at the lower end of the circuit breaker SN for power interruption. In the preferred embodiment of the present invention, advantageously, the plurality of branch circuit breakers SN1, SN2 and SN3 for power interruption are not broken at one time by adopting one of a plurality of relays or a relay having a multi-stage output function, but they are step by step broken, which further extends the time of the supply of the power interruption power for the remaining power interruption loads.

FIG.15 shows a private generator having an automatic switching function to fire extinguishment according to yet another preferred embodiment of the present invention, which is almost similar to FIG.14, except that the supply of the power interruption load stops by means of the circuit breaker SN for power interruption and a part of the plurality of branch circuit breakers SN1, SN2 and SN3 for power interruption disposed at the lower end of the circuit breaker SN for power interruption. In the preferred embodiment of the present invention, advantageously, all of the plurality of branch circuit breakers SN1 and SN2 for power interruption and the circuit breaker SN for power interruption are not broken at one time by adopting one of a plurality of relays or a relay having a multi-stage output function, and the plurality of branch circuit breakers SN1 and SN2 for power interruption are primarily broken. In case where the number of the branch circuit breakers for power interruption is large to cause the construction of the lines to be hard, the supply of major loads is primarily stopped step by step through the plurality of branch circuit breakers SN1 and SN2 for power interruption and finally stopped through the circuit breaker SN for power interruption, which further extends the time of the supply of the power interruption power for the remaining power interruption load. The extending time does not reach the time as FIG.13 but is almost near that.

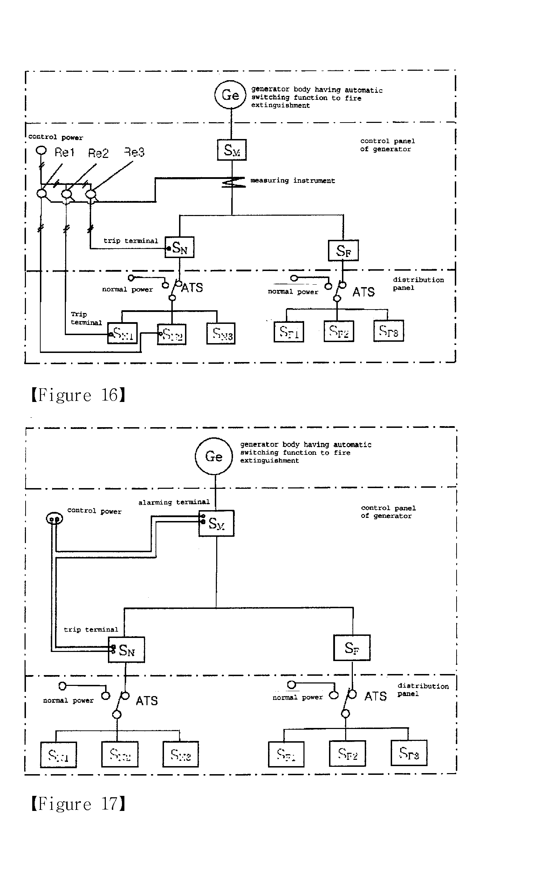

Referring to FIG.16, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a current transformer CT or a power transformer PT as a measuring instrument provided on the main power circuit breaker so as to measure over current on the main power line; an over current relay OCR as a control instrument for protection provided on the main power circuit breaker; and a line part receiving the output set from a trip alarming terminal of the over current relay and supplying control power to a trip terminal of the circuit breaker for power interruption, wherein if the overload is generated on the main power line by the activation of the fire extinguishing facilities, the circuit breaker for power interruption is primarily broken at a previously set overload value, thereby keeping the main power circuit breaker from being broken before the breaking of the circuit breaker for power interruption.

In the preferred embodiment of the present invention, the main power circuit breaker should be manufactured on special specification conditions to allow the alarming terminal to have a sufficient contact capacity, and also, the alarming terminal should have an operating point independent of the operating point of the trip terminal. Alternatively, the main power circuit breaker has a plurality of trip operating outputs used selectively, instead of the alarming terminal, and one of the trip operating outputs should be set lower. This requires special manufacturing process. However, advantageously, only the control line is additionally formed on the outside since the functions of the main power circuit breaker are utilized.

In a simi lar manner as the above, the branch circuit breakers for power interruption may be installed on another control panel, while being separated from the main power circuit breaker, and in this case, the alarming terminal of the circuit breaker for fire extinguishment may be used for the easiness of the construction. At this time, since it is difficult to expect the operating point of the opening of the main power circuit breaker, the operating point of the over current relay is set low so as to prevent the operation of the main power circuit breaker, thereby being automatically switched to the fire extinguishment function at the moment when fire breaks out.

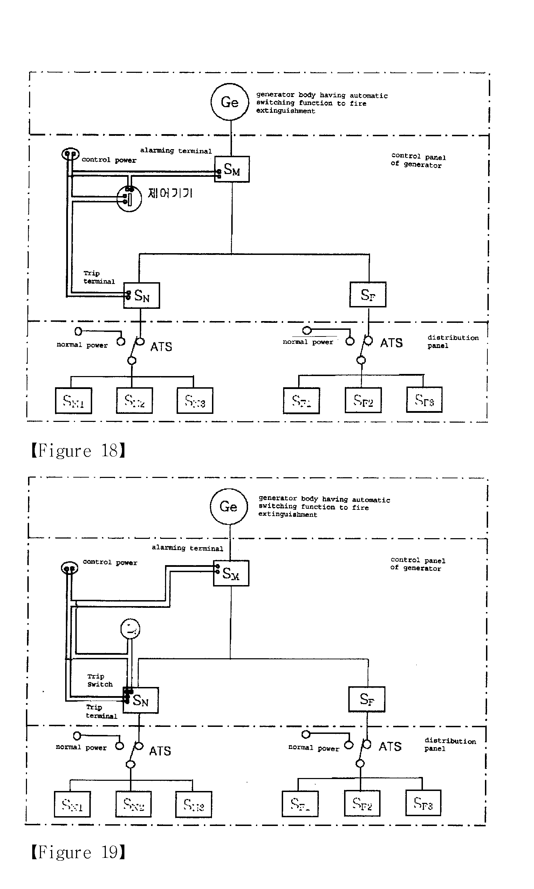

FIG.17 shows a private generator having an automatic switching function to fire extinguishment according to yet another preferred embodiment of the present invention, which is almost similar to FIG.16. In the preferred embodiment of the present invention, advantageously, the circuit breaker for power interruption is opened by adopting the alarming contact of the main power circuit breaker or one of the output contacts of a separate over current relay, and in this case, if the main power circuit breaker is a standard product, it has a small contact capacity. Thus, an auxiliary control instrument like a relay is additionally installed, thereby improving the safety through the capacity of the added construction. FIG.18 shows a private generator having an automatic switching function to fire extinguishment according to yet another preferred embodiment of the present invention, which is almost similar to FIG.16. In the preferred embodiment of the present invention, advantageously, when the private generator having the automatic switching function to fire extinguishment is operated, a lamp is installed to display the operating state, that is, to display the breaking state of the circuit breaker for power interruption, thereby enhancing the conveniences in use and maintenance thereof. The displaying is formed of symbols, characters or patterns on a screen or display window of a digital device or a controller, and alternatively, the lamp on which the characters are displayed is installed, thereby easily recognizing the operating state of the generator to allow the control and manipulation to be easily achieved. Selectively, the memories are stored as events and used to check the history of the generator at the time of after-searching. However, the alarming terminal should be manufactured having special specifications wherein it has a capacity larger than the contact capacity needed to break the circuit breaker for power interruption.

FIG.19 shows a private generator having an automatic switching function to fire extinguishment according to yet another preferred embodiment of the present invention, which is almost same as FIG.18. In the preferred embodiment of the present invention, advantageously, the main power circuit breaker is adopted with a standard product, and when the lack of the capacity of the alarming contact occurs in the direct control of the alarming contact of the over current relay as the main power circuit breaker, the auxiliary control instrument like a relay is used to enhance the safety of the construction.

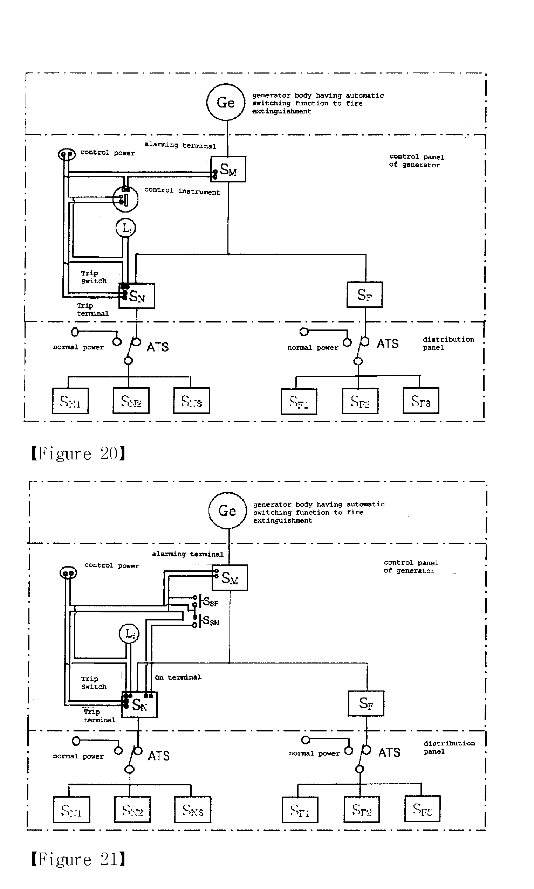

FIG.20 shows a private generator with an automatic switching function to fire extinguishment according to still another preferred embodiment of the present invention, which is almost same as FIG.18, except that control switches are installed to provide functions of testing the switching operation to fire extinguishment and of returning to its original state.

Displaying the automatic switching state to fire extinguishment and installing the control switches or both of them are applied selectively to all of the preferred embodiments of the present invention, and their installing positions are determined on the interior or exterior of the control panel. Also, they are monitored and controlled through a CRT installed remotely.

FIG.21 shows a private generator with an automatic switching function to fire extinguishment according to yet another preferred embodiment of the present invention, which is almost same as FIG.20. In the preferred embodiment of the present invention, advantageously, the main power circuit breaker is adopted with a standard product, and when the lack of the capacity of the alarming contact occurs in the direct control of the alarming contact of the over current relay as the main power circuit breaker, the auxiliary control instrument like a relay is used to enhance the safety of the construction.

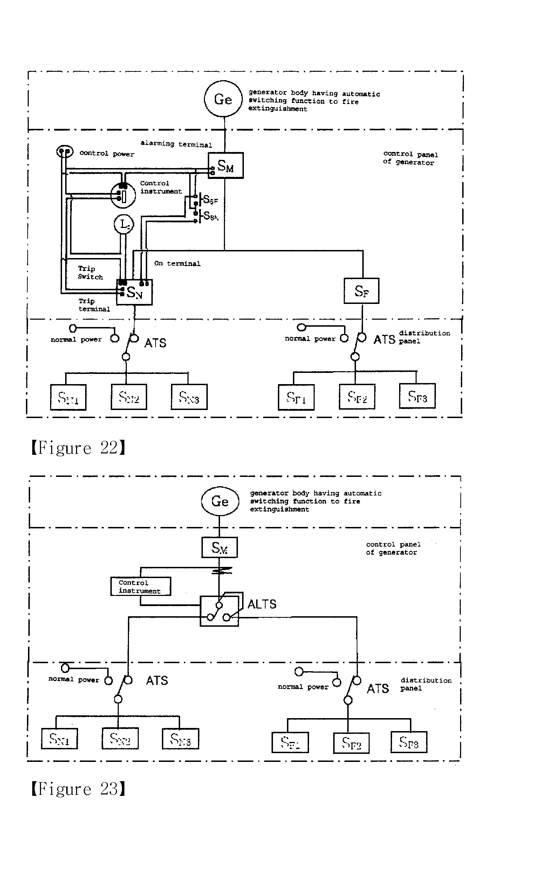

Referring to FIG.22, there is provided a private generator for power interruption and fire extinguishment having an automatic switching function to fire extinguishment, the private generator being used as an emergency power generator available during power interruption of normal power and having a main power circuit breaker, an automatic load transferring switch or an automatic load circuit breaker disposed at the lower end of the main power circuit breaker, and a power interruption line and a fire extinguishment line branched from the lower end of the automatic load transferring switch or the automatic load circuit breaker, the private generator including: a measuring instrument adapted to sense the state of the generation of fire by the variations of a power load on a main power line via the main power circuit breaker; and a control instrument connected to the measuring instrument at an input side thereof and connected to the automatic load transferring switch or the automatic load circuit breaker at an output side thereof, such that when the value of the variations of the power load inputted from the measuring instrument reaches a predetermined set value, the automatic load transferring switch or the automatic load circuit breaker is operated to supply the power interruption load and the fire extinguishment load at the same time, and if the value reaches an overload value, the circuit breaker for power interruption is primarily broken, thereby keeping the main power circuit breaker from being broken by the overload of the power interruption load.

Further, the measuring instrument may be operated to break the automatic load transferring switch or the automatic load circuit breaker by sensing the variations of the load on the fire extinguishment line.

Alternatively, the measuring instrument may be operated to break the automatic load transferring switch or the automatic load circuit breaker by means of a fire signal, and in this case, the circuit breaker for power interruption is broken at the same time as the generation of fire.

Referring to FIG.23, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a line part adapted to break the circuit breaker for power interruption by the interlocking with an operating contact by the operation of the fire extinguishing equipment of the fire extinguishing facilities at the time when fire breaks out, such that the circuit breaker for power interruption is broken as the same time as the generation of the fire, thereby keeping the main power circuit breaker from being broken before the breaking of the circuit breaker for power interruption.

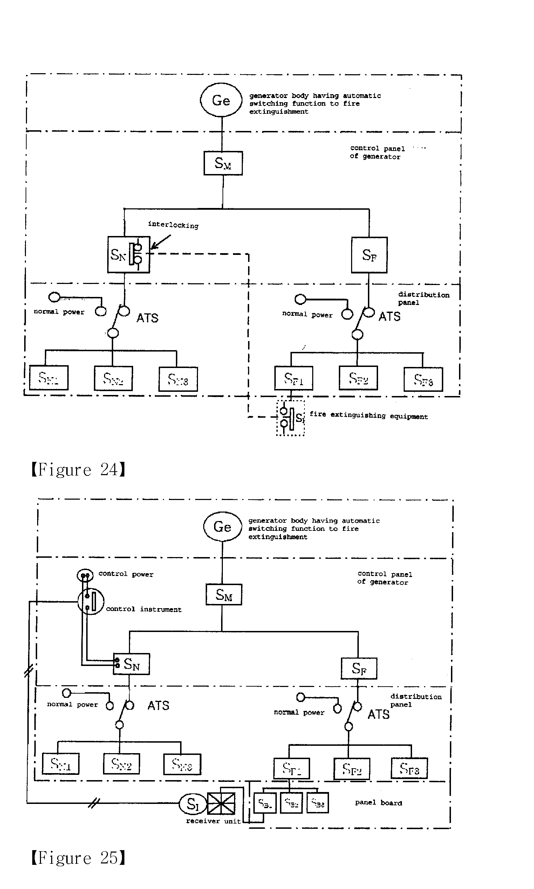

Referring to FIG.24, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a control instrument operated by a fire signal generated from the fire extinguishing facilities at the time of generation of fire; and a line part adapted to break the circuit breaker for power interruption by the operation of the control instrument, such that the circuit breaker for power interruption is broken as the same time as the generation of the fire, thereby keeping the main power circuit breaker from being broken before the breaking of the circuit breaker for power interruption.

The fire signal is detected through sensing, displaying, alarming signal or contact operation by the operation of the fire extinguishment equipment according to the generation of fire, and the fire signal is formed of the fire signal from the relay or receiver unit of the automatic fire detection equipment, a discharge signal from a water pressure switching device for starting a fire pump and from a water flow indicator, an operation of an auxiliary contact or switch of various fire extinguishment equipment, and a fire alarms.

FIG.25 shows a private generator having an automatic switching function to fire extinguishment according to yet another preferred embodiment of the present invention, which is similar to FIG.24. Referring to FIG.25, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a control line part for directly connecting a fire signal line generated from the fire extinguishing facilities upon generation of fire to the circuit breaker for power interruption, such that the circuit breaker for power interruption is broken as the same time as the generation of the fire, thereby keeping the main power circuit breaker from being broken before the breaking of the circuit breaker for power interruption.

The fire signal is detected through sensing, displaying, alarming signal or contact operation by the operation of the fire extinguishment equipment according to the generation of fire, and the fire signal is formed of the fire signal from the relay or receiver unit of the automatic fire detection equipment, a discharge signal from a water pressure switching device for starting a fire pump and from a water flow indicator, an operation of an auxiliary contact or switch of various fire extinguishment equipment, and a fire alarm.

When compared with the construction of FIG.24, the fire signal line should have a sufficient capacity with which the control line and the power capacity can break the circuit breaker for power interruption, and reinforcing batteries are mounted on the battery for control power on the fire receiver unit. In this embodiment, however, since the construction of the control instrument is not needed, the control line is simple in the construction.

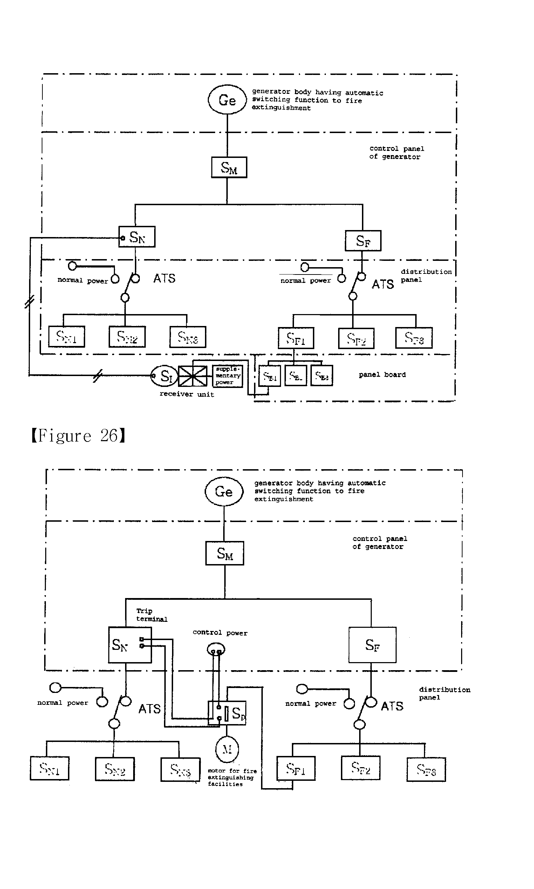

FIG.26 shows a private generator having an automatic switching function to fire extinguishment according to yet another preferred embodiment of the present invention, which is similar to FIG.24. Referring to FIG.25, there is provided a private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator including: a line part for breaking the circuit breaker for power interruption by the activation of an auxiliary contact of a switch of a fire extinguishing motor operated upon generation of fire in the fire extinguishing facilities, such that the circuit breaker for power interruption is broken as the same time as the generation of the fire, thereby keeping the main power circuit breaker from being broken before the breaking of the circuit breaker for power interruption.

### [Industrial Applicability]

As mentioned above, there is provided the private generator for power interruption and fire extinguishment having an automatic switching function to fire extinguishment, wherein the private generator has a single capacity and is switched to supply a power interruption load at the time of power interruption and to supply a fire extinguishment load at the time of generation of fire, thereby providing high economical efficiencies and safety in a fire extinguishing operation.

## Claims

1. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a measuring instrument adapted to sense the state of the generation of fire by the variations of a power load on a main power line; and
a control instrument connected to the measuring instrument at an input side thereof and connected to the circuit breaker for power interruption at an output side thereof, such that when the value of the variations of the power load inputted from the measuring instrument reaches a predetermined set value, the circuit breaker for power interruption is primarily broken, thereby keeping the main power circuit breaker from being broken before the breaking of the circuit breaker for power interruption,
wherein a power interruption load and a fire extinguishment load are at the same time supplied until the private generator reaches an overload state during fire,
and the supply of the fire extinguishment load is primarily kept during the development of fire.

2. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising: a measuring instrument adapted to sense the state of the generation of fire by the variations of a power load on a main power line; and
a control instrument connected to the output side of the measuring instrument at an input side thereof and connected at an output side thereof to a plurality of branch circuit breakers for power interruption branched from the lower end output side of the circuit breaker for power interruption, such that when the value of the variations of the power load inputted from the measuring instrument reaches a predetermined set value, the branch circuit breakers for power interruption are sequentially broken, thereby keeping the main power circuit breaker from being broken before the breaking of all of the branch circuit breakers for power interruption,
wherein a power interruption load and a fire extinguishment load are at the same time supplied until the private generator reaches an overload state during fire and the supply of the fire extinguishment load is primarily kept during the development of fire.

3. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a measuring instrument adapted to sense the state of the generation of fire by the variations of a power load on a main power line; and
*153a control instrument connected to the output side of the measuring instrument at an input side thereof and connected at an output side thereof to the circuit breaker for power interruption and a part of a plurality of branch circuit breakers for power interruption branched from the lower end output side of the circuit breaker for power interruption, such that when the value of the variations of the power load inputted from the measuring instrument reaches a predetermined set value, the part of the branch circuit breakers for power interruption are sequentially broken and the circuit breaker for power interruption is finally broken, thereby keeping the main power circuit breaker from being broken before the breaking of the circuit breaker for power interruption,
wherein a power interruption load and a fire extinguishment load are at the same time supplied until the private generator reaches an overload state during fire and the supply of the fire extinguishment load is primarily kept during the development of fire.

4. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a measuring instrument adapted to sense the state of the generation of fire by the variations of a power load on a main power line;
a control instrument connected to the output side of the measuring instrument at an input side thereof;
a control line part for supplying control power to a trip terminal of the circuit breaker for power interruption under the control of the control instrument; and
an auxiliary control instrument connected to the output side of the control instrument, the control line to which the control power is supplied and the circuit breaker for power interruption, such that when the value of the variations of the power load inputted from the measuring instrument reaches a predetermined set value,
the circuit breaker for power interruption is primarily broken by the control of the control instrument, thereby keeping the main power circuit breaker from being broken before the breaking of the circuit breaker for power interruption,
wherein the circuit breaker for power interruption is broken at a set over current value by the control power, thereby keeping the main power circuit breaker from being broken before the breaking of the circuit breaker for power interruption,
and a power interruption load and a fire extinguishment load are at the same time supplied until the private generator reaches an overload state during fire, thereby primarily keeping the supply of the fire extinguishment load during the development of fire.

5. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a measuring instrument adapted to sense the state of the generation of fire by the variations of a power load on a main power line;
a control instrument connected to the output side of the measuring instrument at an input side thereof;
a control line part for supplying control power to a trip terminal of the circuit breaker for power interruption under the control of the control instrument; and
an auxiliary control instrument connected to the output side of the control instrument, the control line to which the control power is supplied, and a plurality of branch circuit breakers for power interruption branched from the lower end output sides of the circuit breaker for power interruption, such that when the value of the variations of the power load inputted from the measuring instrument reaches a predetermined set value, the plurality of branch circuit breakers for power interruption are sequentially broken by the control of the control instrument,
thereby keeping the main power circuit breaker from being broken before the breaking of all of the plurality of branch circuit breakers for power interruption,
wherein the plurality of branch circuit breakers for power interruption are broken at a set over current value by the control power, thereby keeping the main power circuit breaker from being broken before the breaking of the branch circuit breakers for power interruption, and a power interruption load and a fire extinguishment load are at the same time supplied until the private generator reaches an overload state during fire, thereby primarily keeping and the supply of the fire extinguishment load during the development of fire.

6. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a measuring instrument adapted to sense the state of the generation of fire by the variations of a power load on a main power line;
a control instrument connected to the output side of the measuring instrument at an input side thereof;
a control line part for supplying control power to a trip terminal of the circuit breaker for power interruption under the control of the control instrument; and
an auxiliary control instrument connected to the output side of the control instrument, the control line to which the control power is supplied, a part of a plurality of branch circuit breakers for power interruption branched from the lower end output sides of the circuit breaker for power interruption, and the circuit breaker for power interruption, such that when the value of the variations of the power load inputted from the measuring instrument reaches a predetermined set value, the plurality of branch circuit breakers for power interruption are sequentially broken and the circuit breaker for power interruption is finally broken by the control of the control instrument, thereby keeping the main power circuit breaker from being broken before the breaking of the circuit breaker for power interruption,
wherein the plurality of branch circuit breakers for power interruption are broken at a set over current value by the control power, thereby keeping the main power circuit breaker from being broken before the breaking of the part of the plurality of branch circuit breakers for power interruption and the circuit breaker for power interruption, and a power interruption load and a fire extinguishment load are at the same time supplied until the private generator reaches an overload state during fire, thereby primarily keeping the supply of the fire extinguishment load during the development of fire.

7. A private generator for power interruption and fire extinguishment having an automatic switching function to fire extinguishment, the private generator being used as an emergency power generator available during power interruption of normal power and having a main power circuit breaker and a line for power interruption and a line for fire extinguishment branched from the lower end of the main power circuit breaker, the private generator comprising:
a measuring instrument adapted to sense the variations of a power load on a main power line;
an automatic load circuit breaker or an automatic load transfer switch connected to a power interruption line and a fire extinguishment side line or to respective automatic transfer switches; and
a control instrument connected to the measuring instrument at an input side thereof and connected to the automatic load circuit breaker or the automatic load transfer switch at an output side thereof, such that when the value of the variations of the power load on the main power line reaches a predetermined set value, the supply of a power interruption load is automatically stopped to primarily break the power interruption line at the time of the generation of fire, thereby keeping the main power circuit breaker from being broken before the breaking of the power interruption line,
wherein a power interruption load and a fire extinguishment load are at the same time supplied until the private generator reaches an overload state during fire and the supply of the fire extinguishment load is primarily kept during the development of fire.

8. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
the main power circuit breaker for embedding a measuring instrument adapted to sense the variations of a power load on a main power line and an over current relay as a control instrument connected to the measuring instrument therein, so as to provide an output contact to an alarming terminal or an output terminal of an auxiliary over current relay separately installed at a set over current value; and
a control line part for supplying control power to a trip terminal of the circuit breaker for power interruption through a reserve output terminal as the alarming terminal and the separate output terminal for alarming the over current of the main power circuit breaker,
wherein the circuit breaker for power interruption is broken at an over current value set at the control instrument through the supply of the control power to the control line, thereby keeping the main power circuit breaker from being broken before the breaking of the circuit breaker for power interruption, and a power interruption load and a fire extinguishment load are at the same time supplied until the private generator reaches an overload state during fire, thereby primarily keeping the supply of the fire extinguishment load during the development of fire.

9. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
the main power circuit breaker for embedding a measuring instrument adapted to sense the variations of a power load on a main power line and an over current relay as a control instrument connected to the measuring instrument therein, so as to provide an output contact to an alarming terminal or an output terminal for an auxiliary reserve over current relay at a set over current value;
a control line part for supplying control power to a trip terminal of the circuit breaker for power interruption through a reserve output terminal as the over current alarming terminal of the main power circuit breaker; and
an auxiliary control instrument connected to the main power circuit breaker, the control line part to which the control power is supplied, and the circuit breaker for power interruption, such that when the value of the variations of the power load inputted from the measuring instrument reaches a predetermined set value of the control instrument, the circuit breaker for power interruption is primarily broken, thereby keeping the main power circuit breaker from being broken before the breaking of the circuit breaker for power interruption,
*186wherein a power interruption load and a fire extinguishment load are at the same time supplied until the private generator reaches an overload state during fire and the supply of the fire extinguishment load is primarily kept during the development of fire.

10. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a contact part operated by the operation of the fire extinguishing equipment for fire extinguishing facilities installed via a branch circuit breaker for fire extinguishment disposed at the lower end of the circuit breaker for fire extinguishment; and
an interlocking device connected to the contact part through a control line and
to the circuit breaker for power interruption,
wherein the circuit breaker for power interruption is primarily broken by means of interlocking through the operation of the fire extinguishing equipment when a fire breaks out, such that the main power circuit breaker is kept from being broken before the breaking of the circuit breaker for power interruption, thereby keeping the supply of fire extinguishment power.

11. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
a fire signal generating device for generating a fire signal detected by the operation of fire extinguishing equipment disposed via a branch circuit breaker for fire extinguishment installed at the lower end of the circuit break for fire extinguishment; and
a control instrument for supplying control power to break the circuit breaker for power interrupt ion by the generation of the fire signal, thereby primarily breaking the circuit breaker for power interruption when the fire breaks out, such that the main power circuit breaker is kept from being broken before the breaking of the circuit breaker for power interruption, thereby keeping fire extinguishment power therein.

12. A private generator for power interruption and fire extinguishment having an automatic switching function to fire extinguishment, the private generator being used as an emergency power generator available during power interruption of normal power and having a main power circuit breaker and a circuit breaker for power interruption and a circuit breaker for fire extinguishment branched from the lower end of the main power circuit breaker, the private generator comprising:
an auxiliary contact part operated by the operation of a fire extinguishment motor switch of fire extinguishing facilities disposed via a branch circuit breaker for fire extinguishment installed at the lower end of the circuit breaker for fire extinguishment; and
a trip terminal part connected to the auxiliary contact switch through a control line and embedded in the circuit breaker for power interruption,
wherein the circuit breaker for power interruption is primarily broken by the supply of control power through the auxiliary contact part operated by the operation of the fire extinguishment motor switch, when a fire breaks out, such that the main power circuit breaker is kept from being broken before the breaking of the circuit breaker for power interruption, thereby keeping fire extinguishment power therein.

13. A private generator according to claim 10 or 11, wherein the contact part operated by the operation of the fire extinguishing equipment or the fire signal generating device comprises one of a relay of automatic fire detection equipment, a fire signal device of a receiver unit, a water pressure switching device for starting a fire pump outputting a signal upon driving, a discharge signal device of a water flow indicator, a monitoring control panel for a fire pump, an operation display device of a power control panel, and a tamper switch of a water pipe of automatic water-based fire extinguishing equipment.

14. A private generator according to any one of claims 1 to 12, further comprising a display device adapted to receive the control power through the control line and connected to the circuit breaker for power interruption, for displaying the switching state to fire extinguishment on a display lamp, a display window, or a screen with one or more of characters, symbols, and patterns at an area on which the generator is installed or controlled remotely.

15. A private generator according to any one of claims 1 to 12, further comprising a control switch connected to the main power circuit breaker and the circuit breaker for power interruption so as to selectively break the circuit breaker for power interruption and the circuit breaker for fire extinguishment, thereby performing a switching control test to fire extinguishment and a returning test to an original state.

16. A private generator according to any one of claims 1 to 9, wherein the measuring instrument comprises one of a current transformer (CT) and a power transformer (PT).

17. A private generator according to any one of claims 1 to 7, wherein each of the measuring instrument and the control instrument comprises one of a digital total power controller, an intelligent communication & measuring device, a digital multi power meter, an intelligent measuring & protection device for feeder, and a maximum power load controller.

18. A private generator according to any one of claims 1 to 7, wherein each of the control instrument and the auxiliary control instrument comprises one of a generator controller, a programmable logic controller (PLC), a microcomputer (MICOM), a central processing unit (CPU), a personal computer (PC), a direct digital controller (DDC), a distributed control system (DCS), a distributed operated console (DOC), a supervisory control and data acquisition (SCADA), an application specific integrated circuit (ASIC), and an application specific instruction processor (ASIP).

19. A private generator according to any one of claims 1 to 9, wherein each of the control instrument and the auxiliary control instrument comprises one of a single or a plurality of over current relays (OCR), over power relays (OPR), electronic over current relays (EOCR), meter relays, watt meters, watt-hour meters, var meters, var-hour meters, ammeters, digital multi power meters, digital relays, inductive relays, thermal relays, and control relays.

20. A private generator according to any one of claims 1 to 9, wherein the set value of the control instrument is set with one or two or more values in the range from 0% to 150% of the rated load so as to break the circuit breaker for power interruption before the main power circuit breaker is broken by the overload of the main power line upon the power interruption at the state of fire or upon the generation of fire at the state of the power interruption, such that the power interruption load and the fire extinguishment load are supplied at the same time from an initial step of the fire, before the private generator reaches an overload state.

21. A private generator according to any one of claims 1 to 9, wherein the set value of the control instrument is set with one value in the range from 0% to 30% of the rated load so as to break the circuit breaker for power interruption before the main power circuit breaker is broken by the overload of the main power line upon the power interruption at the state of fire or upon the generation of fire at the state of the power interruption, such that the power interruption load is broken at the time of generation of fire, thereby keeping fire extinguishment power therein.
